# FASCICULE DE BREVET EUROPEEN

(11) **EP 2 040 560 B1**
(45) Date de publication et mention de la délivrance du brevet: **28.04.2010**
(21) Numéro de dépôt: 07788828.7
(22) Date de dépôt: 01.06.2007
(51) Int. Cl.: A23C 9/13, A23C 9/123

(54) **GRANULES DE CYSTEINE ET LEURS UTILISATIONS A TITRE D'ACTIVATEURS DE CROISSANCE DE BIFIDOBACTERIUM ANIMALIS LACTIS**
CYSTEINGRANULATE UND IHRE VERWENDUNG ALS WACHSTUMSSTIMULANZIEN FÜR BIFIDOBACETERIUM ANIMALIS LACTIS
CYSTEINE GRANULES AND USE THEREOF AS BIFIDOBACTERIUM ANIMALIS LACTIS GROWTH STIMULANTS

(30) Priorité: 13.07.2006 FR 0606421
(43) Date de publication de la demande: 01.04.2009
(73) Titulaire: Compagnie Gervais Danone, 75009 Paris (FR)
(72) Inventeur: MARCHAL, Laurent, 91360 Villemoisson sur Orge (FR); DHOOSCHE, Xavier, 92260 Fontenay aux Roses (FR)
(74) Mandataire: Paris, Fabienne
(86) Numéro de dépôt international: PCT/FR2007/000916
(87) Numéro de publication internationale: WO 2008/006949

(56) Documents cités:
- EP-A1- 0 486 738
- FR-A1- 2 855 182
- GB-A- 1 271 674
- DAVE R I ET AL: "INGREDIENT SUPPLEMENTATION EFFECTS ON VIABILITY OF PROBIOTIC BACTERIA IN YOGHURT" JOURNAL OF DAIRY SCIENCE, AMERICAN DAIRY SCIENCE ASSOCIATION, SAVOY, IL, US, vol. 81, no. 11, novembre 1998 (1998-11), pages 2804-2816, XP000787922 ISSN: 0022-0302
- DECHTER T H ET AL: "SURVIVABILITY AND BETA-GALACTOSIDASE ACTIVITY OF BIFIDOBACTERIA STORED AT LOW TEMPERATURES" FOOD BIOTECHNOLOGY, DEKKER, NEW YORK, NY, US, vol. 12, no. 1/2, 1998, pages 73-89, XP008039285 ISSN: 0890-5436

## Description

### DOMAINE TECHNIQUE DE L'INVENTION

La présente invention est relative à des granules de cystéine, et à leurs utilisations à titre d'activateurs de croissance de *Bifidobacterium animalis* ssp. *lactis*.

### ARRIÈRE-PLAN DE L'INVENTION

Dans le domaine des produits laitiers, le marché des probiotiques est en constante augmentation.
Afin de proposer des produits contenant des niveaux élevés de souches probiotiques tout en apportant des qualités organoleptiques intéressantes, les industriels laitiers sont confrontés aux problèmes des fermentations mixtes qui mettent en oeuvre à la fois des ferments dits techniques ou technologiques, et des ferments probiotiques.

En effet, les souches dites probiotiques sont représentées par des espèces à croissances lentes sur substrat laitier (temps de génération de 1h à 2h pour *Bifidobacterium*), alors que les ferments technologiques proviennent des ferments yoghourt à croissance plutôt rapide (temps de génération de 15 min à 30 min pour *S.thermophilus* et *L. bulgaricus*).
Le bon compromis entre la croissance des ferments technologiques et des probiotiques est difficile à trouver, et la plupart des industriels favorisent l'aspect organoleptique par rapport à la quantité de probiotique : Les populations de probiotique généralement observées se situent entre 10⁶ à 10⁷ ufc/g de produit fermenté.
Aujourd'hui, la plupart des études santés sur ces probiotiques sont réalisées par des produits contenant au minimum 10⁸ ufc/g de souches probiotiques.

La recherche d'un composé activateur de croissance d'un probiotique est basée sur la connaissance approfondie de la souche au niveau de ces besoins nutritifs et à la capacité du substrat laitier à les combler.
D'autre part, il faut vérifier que ces composés n'exercent pas d'effet négatif, ni ne stimulent la croissance des souches dites techniques, qu'ils soient de qualité alimentaire, et qu'ils ne dégradent pas l'organoleptie du produit.

En outre, les quantités de composés activateurs que l'on doit mettre en oeuvre pour avoir une stimulation et qui remplissent les contraintes ci-dessus sont généralement très faibles en proportion par rapport aux substrats laitiers.
Ces doses (généralement inférieures à 100mg/L) et les écarts acceptés ne sont pas compatibles avec les systèmes de mesures et d'incorporations utilisés pour réaliser les substrats laitiers, la mise en oeuvre industrielle de ces substances devient alors problématique.

Le problème est encore plus délicat lorsque les souches dites techniques mises en oeuvre doivent fonctionner dans le cadre d'une symbiose de plusieurs souches de bactéries lactiques, comme c'est le cas pour les laits fermentés qui mettent en oeuvre une fermentation symbiotique *S. thermophilus* et *L. bulgaricus*, en sus de la fermentation lactique menée par les probiotiques.

Différents tests ont été conduits dans l'art antérieur afin de déterminer des conditions permettant de favoriser la croissance des probiotiques. La plupart de ces essais ont néanmoins été menés sur des cultures pures de bactéries probiotiques, sans tenir compte de l'éventuelle présence et activité d'autres souches lactiques lors de la fabrication du produit en milieu industriel.

Une solution est décrite dans la demande de brevet française FR 05 07529 déposée le 15 juillet 2005 au nom de Compagnie Gervais Danone : elle propose d'utiliser un acide aminé soufré à titre d'activateur des bifidobactéries.

La présente demande propose un perfectionnement qui est spécialement adapté aux souches de *Bifidobacterium animalis* ssp. *lactis*. La présente demande propose ainsi un inoculum qui ne présente pas les inconvénients de l'art antérieur, et qui résout le problème de l'activation et/ou stimulation simple, sûre et efficace de *B. animalis lactis* lors de la production en milieu industriel d'un produit laitier fermenté à valeur probiotique qui est destiné à la consommation humaine, et plus particulièrement d'un produit laitier fermenté qui, en sus de la fermentation opérée par le probiotique *B. animalis lactis*, met en oeuvre la fermentation symbiotique *S. thermophilus - L. bulgaricus*.

FR-A1-2855182 décrit un inoculum comprenant un ferment lactique et une levure lysée.

### RÉSUMÉ DE L'INVENTION

La présente invention est relative à un inoculum perfectionné de *Bifidobacterium animalis* ssp. *lactis*, aux utilisations de cet inoculum, et aux produits laitiers fermentés obtenus à l'aide de cet inoculum.
L'inoculum de l'invention est spécialement adapté à l'ensemencement direct d'au moins une souche de *B. animalis lactis* dans un substrat laitier, pour la transformation de ce substrat laitier en produit laitier fermenté adapté à la consommation humaine, et plus particulièrement en produit laitier fermenté à valeur probiotique contenant au moins une souche de *B. animalis lactis*.

L'inoculum comprend, en mélange ou sous forme de collection, des granules congelés et/ou un(des) lyophilisat(s), dans lesquels se trouvent une L-cystéine particulière, et au moins une souche de *B. animalis lactis*.
Les inventeurs ont sélectionné une forme particulière de cystéine, à savoir une L-cystéine qui est sous une forme telle que les granules et/ou lyophilisat(s) produits à partir de cette cystéine ont (une fois décongelés et/ou re-solubilisé(s)) un pH qui est au moins égal à 4. Un exemple d'une L-cystéine appropriée est la L-cystéine communément appelée cystéine base (dont la formule sous forme réduite est HSCH₂CH(NH₂)CO₂H).
Cette forme particulière de cystéine est plus efficace que les autres formes de cystéine habituellement utilisées (généralement, de la cystéine-HCl, sous forme de chlorhydrate monohydraté de cystéine).
Malgré la faible solubilité de la L-cystéine particulière sélectionnée par les inventeurs, les inventeurs ont réussi à produire un inoculum sous forme de granules congelés et/ou de lyophilisat(s), qui combine ou intègre cellules de *B. animalis lactis* et cette forme particulière de L-cystéine, sans pour autant nuire à l'état physiologique et/ou au métabolisme de *B. animalis lactis*.
Dans une version dite « intégrée » de l'inoculum selon l'invention, au moins un granule ou lyophilisat de l'inoculum contient à la fois cellules de *B. animalis lactis* et cette forme particulière de L-cystéine. Dans une version dite « combinée » de l'inoculum selon l'invention, une partie des granules ou un lyophilisat contient la L-cystéine particulière conforme à l'invention, et une autre partie des granules ou un autre lyophilisat contient les cellules de *B. animalis lactis*.
La présente invention propose donc un inoculum de *B. animalis lactis* à activateur cystéine combiné ou intégré.

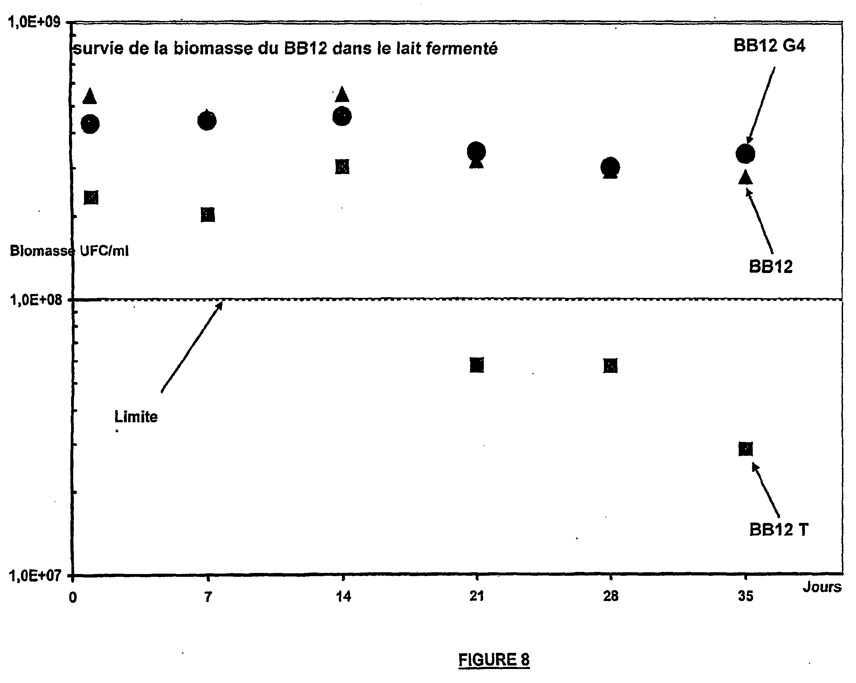

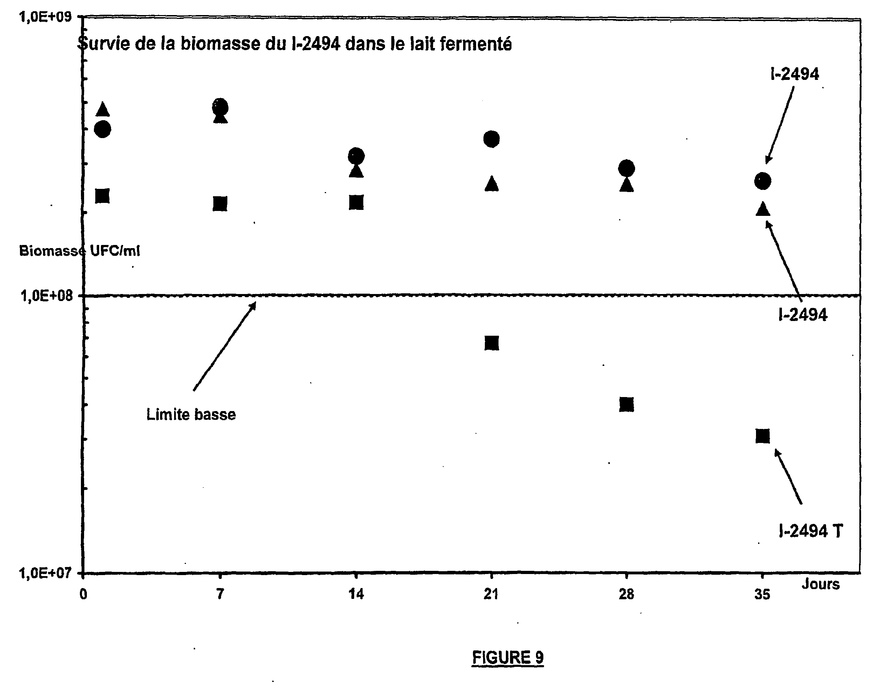

De manière remarquable, l'inoculum selon l'invention permet d'obtenir une population de ladite au moins une souche de *B. animalis lactis* (ou, s'il y en a plusieurs, desdites souches de *B. animalis lactis*), qui ne descend pas au-dessous de 5.10⁷ ufc, de préférence pas au-dessous de 10⁸ ufc, par gramme de produit fermenté, après au moins 20 jours, de préférence au moins 30 jours de conservation dudit produit fermenté à une température comprise entre 4 et 11 °C (*cf*. Figures 8 et 9).

L'inoculum selon l'invention est spécialement adapté à la production de lait fermenté à haute valeur probiotique, dans la mesure où il permet de maintenir une très forte teneur en *B. animalis lactis* au cours de la conservation du produit en milieu réfrigéré, et dans la mesure où l'activateur L-cystéine particulier utilisé est présent à des doses telles que ni sur la symbiose *S. thermophilus* + *L. bulgaricus*, ni les qualités organoleptiques du lait fermenté, ne s'en trouvent négativement affectées.

### BRÈVE DESCRIPTION DES FIGURES

Dans la présente demande de brevet, il est fait référence aux figures suivantes :

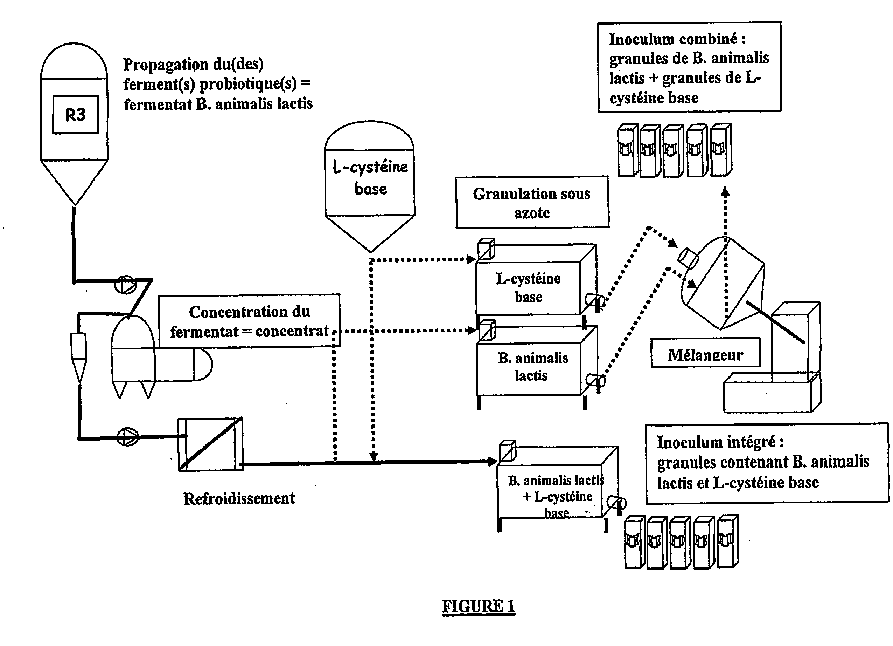

**Figure 1** : schéma de principe de :
   - la solution combinée, qui propose de produire des granules de ferment(s) probiotique(s) et des granules de cystéine, ces deux types de granules pouvant être ensuite mélangés ensemble, et de
   - la solution intégrée, qui propose de produire des granules contenant à la fois le(s) ferment(s) probiotique(s) et de la cystéine.
**Figure 2** : schéma de principe de la production de granules intégrés (cystéine HCl + ferment(s) probiotique(s)) : ferment Bifidobacterium animalis lactis souche I-2494 ou souche BB12®, formulé en granules intégrés, contenant à la fois le ferment probiotique et de la cystéine, la cystéine étant ici de la cystéine HCl.
**Figure 3** : évolution du pH au cours du temps pour un mix laitier inoculé avec :
   - des granules de *Bifidobacterium animalis lactis* souche I-2494 (courbe témoin, située en bas), ou avec
   - des granules intégrés contenant à la fois *Bifidobacterium animalis lactis* souche I-2494 et cystéine HCL (courbe du haut),
   illustrant la dégradation de l'état physiologique qui est subie par le probiotique *Bifidobacterium animalis lactis*, lorsqu'il est formulé avec de la cystéine HCl au sein de mêmes granules (formulation intégrée avec Cystéine HCl).

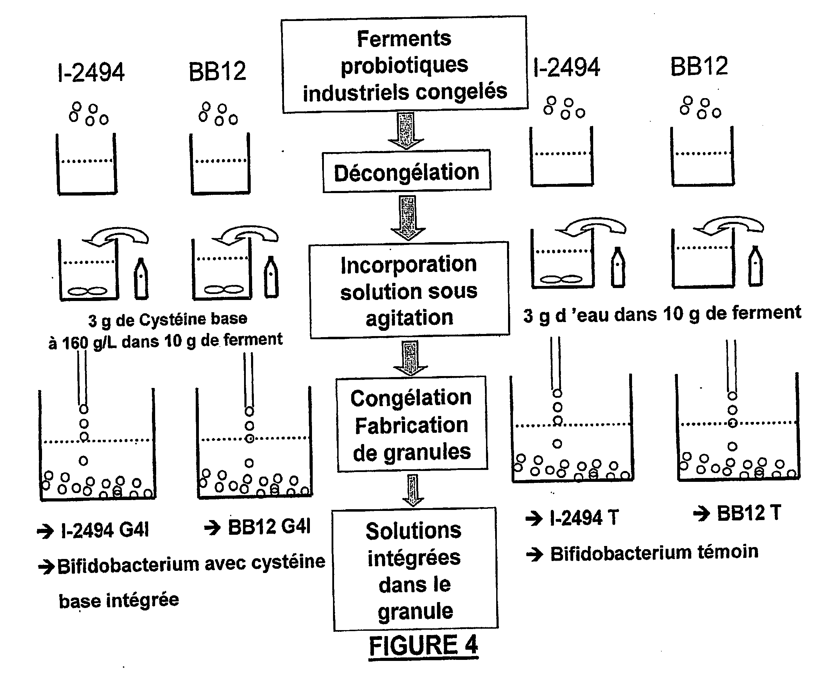

**Figure 4** : schéma de principe de la production de granules intégrés (cystéine base + ferment(s) probiotique(s)) : ferment *Bifidobacterium animalis lactis* souche I-2494 ou souche BB12®, formulé en granules intégrés, contenant à la fois le ferment probiotique et de la cystéine, la cystéine étant ici de la cystéine base.

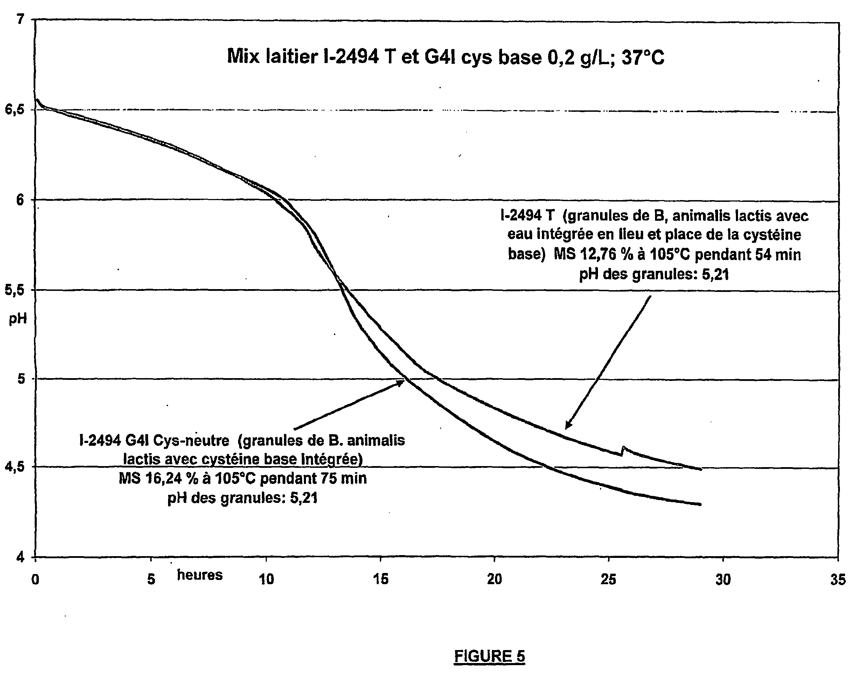

**Figure 5** : évolution du pH au cours du temps pour un mix laitier inoculé avec :
   - des granules de *Bifidobacterium animalis lactis* souche 1-2494 (courbe témoin, située en haut), ou avec
   - des granules intégrés contenant à la fois *Bifidobacterium animalis lactis* souche I-2494 et de la cystéine base (courbe du bas),
   illustrant le fait que la sélection de cystéine base pour la formulation de granules intégrés de (*Bifidobacterium animalis lactis* + cystéine) permet de ne pas détériorer l'état physiologique de ce probiotique.

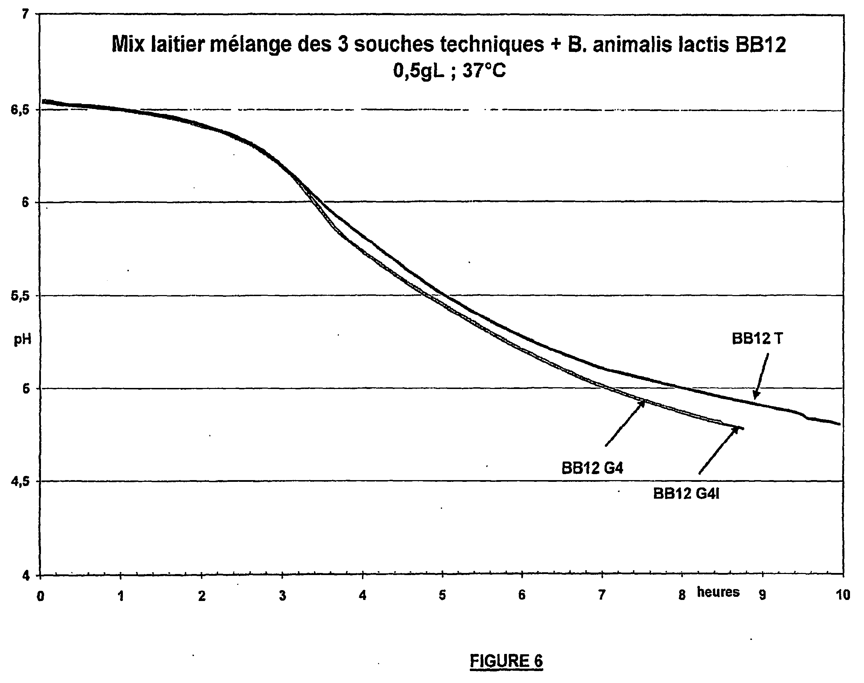

**Figures 6 à 9** : comparaison de mix laitiers,
   - qui sont ensemencés à hauteur de 0,5 g/L par des granules congelés de ferments techniques (mélange de granules de *S. thermophilus* I-1630, *L. bulgaricus* - I-1632 et *L. bulgaricus* 1-1519), et des granules congelés de ferment probiotique *Bifidobacterium animalis lactis* (souche BB12®, ou souche 1-2494), et
   - dans lesquels on apporte de la cystéine base sous forme de granules de cystéine distincts des granules de ferment probiotique (solution combinée G4), ou bien sous forme intégrée aux granules de ferment probiotique (solution intégrée G41), par comparaison au mix témoin dans lequel de l'eau est apportée en lieu et place de la cystéine intégrée ;

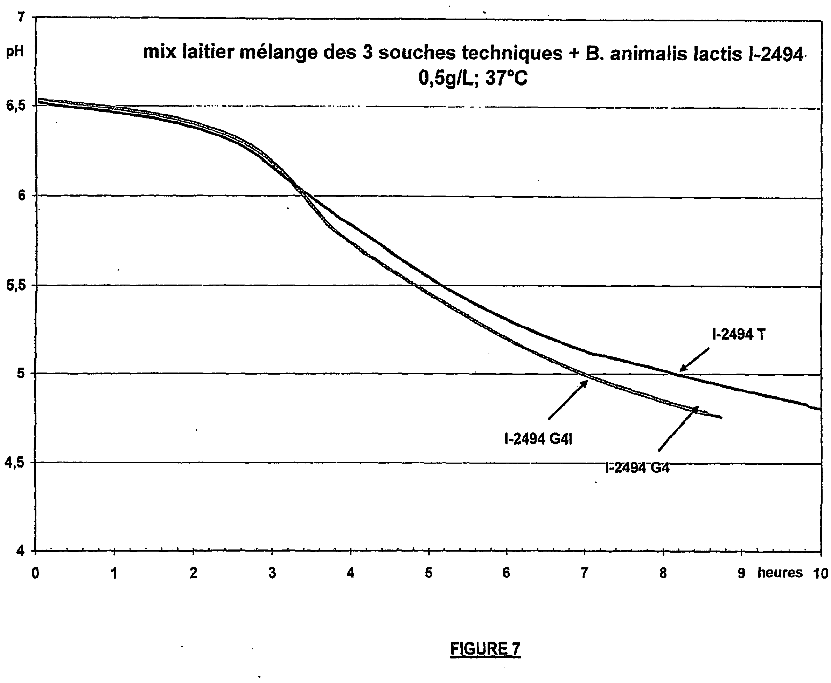

Figures 6 et 7 : évolution du pH au cours du temps (en heures) ;
Figures 8 et 9 : évolution de la biomasse (UFC/mL) au cours du temps (en jours) lors de la conservation du produit laitier fermenté à 10°C ;
Figures 6 et 8: ferment probiotique *Bifidobacterium animalis lactis* souche BB12®
   - mix laitier BB12® T = mix laitier ensemencé à hauteur de 0,5 g/L par un mélange de granules de ferments techniques et de granules témoin de ferment *Bifidobacterium* BB12® (granules contenant de l'eau en lieu et place de la cystéine),
   - mix laitier BB12® G4 = mix laitier ensemencé comme le mix laitier BB12® T, à savoir à hauteur de 0,5 g/L par un mélange de granules de ferments techniques et de granules témoin de ferment *Bifidobacterium* BB12®, mais dans lequel on ajoute de la cystéine base sous forme de granules congelés distincts des granules de probiotique, de sorte à apporter une concentration de 7,5 mg/L de cystéine dans le mix,
   - mix laitier BB12® G4I = mix laitier ensemencé à hauteur de 0,5 g/L par un mélange de granules de ferments techniques et de granules intégrés de ferment *Bifidobacterium* BB12®, ces granules intégrés de probiotique contenant de la cystéine base, de sorte à apporter 7,5 mg/L de cystéine base dans le mix ;
Figures 7 et 9 : ferment probiotique *Bifidobacterium animalis lactis* 1-2494
   - mix laitier I-2494 T = mix laitier ensemencé à hauteur de 0,5 g/L par un mélange de granules de ferments techniques et de granules témoin de ferment *Bifidobacterium* 1-2494 (granules contenant de l'eau en lieu et place de la cystéine),
   - mix laitier I-2494 G4 = mix laitier ensemencé comme le mix laitier I-2494 T, à savoir à hauteur de 0,5 g/L par un mélange de granules de ferments techniques et de granules témoin de ferment *Bifidobacterium* I-2494, mais dans lequel on ajoute de la cystéine base sous forme de granules congelés distincts des granules de probiotique, de sorte à apporter une concentration de 7,5 mg/L de cystéine dans le mix,
   - mix laitier I-2494 G4I = mix laitier ensemencé à hauteur de 0,5 g/L par un mélange de granules de ferments techniques et de granules intégrés de ferment *Bifidobacterium* I-2494, ces granules intégrés de probiotique contenant de la cystéine base, de sorte à apporter 7,5 mg/L de cystéine base dans le mix.

### DESCRIPTION DETAILLÉE

### Quelques définitions :

Dans la présente demande, on donne à tous les termes la portée et la signification qu'ils prennent usuellement dans le domaine de l'industrie laitière et/ou de l'industrie alimentaire.
Ainsi, lorsqu'il est fait référence à une « fermentation lactique », il s'agit d'une fermentation lactique acidifiante, qui se traduit par une acidification suite à la production d'acide lactique pouvant s'accompagner de production d'autres acides, de dioxyde de carbone, et de diverses substances telles que des exopolysaccharides (EPS) ou des substances aromatiques, par exemple diacétyle et acétaldéhyde.
De même, on entend par « ferment lactique », un microorganisme ou une souche de microorganismes vivant ou viable, qui est capable de mener une telle fermentation lactique acidifiante sur un substrat laitier.
On donne au terme « laits fermentés » sa signification usuelle dans le domaine de l'industrie laitière, c'est-à-dire des produits qui sont destinés à la consommation animale, et plus particulièrement humaine, et qui sont issus de la fermentation lactique acidifiante d'un substrat laitier. Ces produits peuvent contenir des ingrédients secondaires tels que fruits, végétaux, sucres, arômes, etc.

L'appellation de « lait fermenté » répond à des normes officielles strictes. On peut ainsi se reporter au Codex Alimentarius (préparé par la Commission du Codex Alimentarius sous l'égide de la FAO et de l'OMS, et publié par la Division Information de la FAO, disponible en ligne sur http://codexalimentarius.net ; *cf*. plus particulièrement, le volume 12 du Codex Alimentarius « Normes Codes pour le lait et les produits laitiers », et la norme « CODEX STAN A-11(a)-1975 », dont le contenu est incorporé dans la présente demande par référence).
On peut plus particulièrement se reporter au Décret français n°88-1203 du 30 décembre 1988 relatif aux laits fermentés et au yoghourt ou yaourt, publié au Journal Officiel de la République Française du 31 décembre 1988. Le contenu de ce Décret est incorporé dans la présente demande par référence.

Le terme « lait fermenté » est ainsi réservé dans la présente demande au produit laitier préparé avec un substrat laitier qui a subi un traitement au moins équivalent à la pasteurisation, ensemencé avec des microorganismes appartenant à l'espèce ou aux espèces caractéristiques de chaque produit. La coagulation des « laits fermentés » ne doit pas être obtenue par d'autres moyens que ceux qui résultent de l'activité des microorganismes utilisés.

Un « lait fermenté » n'a subi aucun traitement permettant de soustraire un élément constitutif du substrat laitier mis en oeuvre, et notamment n'a pas subi un égouttage du coagulum.
Un « lait fermenté » peut être additionné d'un ou plusieurs extraits d'aromates, d'un ou plusieurs arômes naturels, ainsi que, dans la limite de 30 pour 100 en poids du produit fini, d'un ou plusieurs sucres et autres denrées alimentaires conférant une saveur spécifique, voire de céréales.
L'incorporation en tant que produits de substitution de matières grasses et/ou protéiques d'origine non laitière est interdite.

La quantité d'acide lactique libre contenue dans un lait fermenté ne doit pas être inférieure à 0,6 gramme pour 100 grammes lors de la vente au consommateur, et la teneur en matière protéique rapportée à la partie lactée ne doit pas être inférieure à celle d'un lait normal.

Le terme « substrat laitier » est, dans la présente demande, entendu comme signifiant « lait » au sens où l'entend l'industrie laitière, c'est-à-dire un substrat contenant essentiellement du lait et/ou des composants du lait, et dont la composition est telle que la fermentation lactique de ce substrat laitier par des souches de bactérie(s) lactique(s), telle(s) que *S. thermophilus* et/ou *L. bulgaricus*, conduit à un produit qui peut être destiné à l'alimentation humaine, et plus particulièrement qui répond à l'appellation de lait fermenté.
Le terme « substrat laitier » couvre ainsi le lait d'origine animale sous toutes ses formes et dans toutes ses variantes de compositions : lait écrémé ou non, lait concentré ou non, lait ultrafiltré ou non, lait frais ou non, lait en poudre ou non, lait reconstitué ou non, lait recombiné ou non, lait enrichi en constituants du lait ou non, lait additionné ou non d'agents utiles à la fabrication ou à la qualité du produit fini, tels que agents de saveur, arômes, sucres, etc. Par exemple, un substrat laitier destiné à la fabrication de laits fermentés, peut comprendre du lait écrémé, de la crème et de la poudre de lait écrémé (cf. exemple 1 ci-dessous).

Le terme « substrat laitier » n'inclut toutefois pas dans sa portée la signification de « milieu de culture ». En effet, le terme « milieu de culture » vise un milieu destiné à favoriser et/ou stimuler la croissance de bactéries lactiques, et par là, à produire un inoculum de bactéries lactiques, alors que le terme « substrat laitier » vise un milieu qui est destiné à subir une transformation par fermentation, pour produire un aliment destiné à une consommation humaine. Ainsi, de nombreux composés qui peuvent être ajoutés dans un milieu de culture pour stimuler et/ou favoriser la croissance des bactéries lactiques, ne peuvent être ajoutés dans un substrat laitier pour l'obtention d'un lait fermenté ou yaourt.
C'est notamment le cas :
- de nombreux agents tensio-actifs et/ou émulsifiants et/ou agents solubilisants et/ou détergents, tels que le polyoxyethylene-sorbitan-20-monooleate (aussi connu sous le nom de polysorbate 80, ou de Tween 80),
- d'acides de type citrate, acétate,
- d'extraits de viande,
- peptones végétales,
- glycérophosphate.

Les ferments lactiques les plus couramment utilisés comprennent les bactéries lactiques suivantes :
- des *Streptococcus thermophilus* (par exemple, la souche I-1630 disponible auprès de la CNCM), et
- des *Lactobacillus delbrueckii* ssp. *bulgaricus*, ou *Lactobacillus bulgaricus* (par exemple, les souches 1-1519 et I-1362 disponibles auprès de la CNCM),
- des *Pediococcus acidilacti*,
- des *Leuconostoc*, telles que les :
   ■ *Leuconostoc cremoris*,
   ■ *Leuconostoc dextranicum*,
   ■ *Leuconostoc lactis*,
- des *Lactobacillus,* telles que les :
   ■ *Lactobacillus acidophilus* (par exemple, la souche I-0967 disponible auprès de la CNCM),
   ■ *Lactobacillus casei* (par exemple, la souche I-518 disponible auprès de la CNCM),
   ■ *Lactobacillus helveticus*,
   ■ *Lactobacillus delbrueckii* ssp. *lactis* (par exemple, la souche I-2843 disponible auprès de la CNCM),
- des *Lactococcus*, telles que les :
   ■ *Lactococcus cremoris*,
   ■ *Lactococcus lactis* ssp. *lactis* (par exemple, la souche 1-1631 disponible auprès de la CNCM),
   ■ *Lactococcus lactis* ssp. *lactis* biovar *diacetylactis* (par exemple, la souche I-2806 disponible auprès de la CNCM),
- des *Bifidobacterium*, telles que les :
   ■ *Bifidobacterium animalis lactis* (par exemple, la souche I-2494 disponible auprès de la CNCM, ou la souche commercialisée sous la référence BB12® par Chr. Hansen),
   ■ *Bifidobacterium breve,*
   ■ *Bifidobacterium bifidum*,
   ■ *Bifidobacterium longum,*
   ■ *Bifdobacterium infantis*.

Les bactéries lactiques probiotiques sont définies comme étant des bactéries lactiques vivantes qui, lorsqu'elles sont consommées en quantités suffisantes, ont des effets bénéfiques sur la santé, au-delà de leur valeur nutritionnelle de base (définition officielle de l'Organisation Mondiale de la Santé).
Les bactéries lactiques probiotiques comprennent notamment les bactéries lactiques suivantes :
- des *Lactobacillus,* telles que les :
   ■ *Lactobacillus acidophilus* (par exemple, la souche I-0967 disponible auprès de la CNCM),
   ■ *Lactobacillus casei* (par exemple, la souche I-518 disponible auprès de la CNCM),
   ■ *Lactobacillus helveticus,*
   ■ *Lactobacillus delbrueckii* ssp. *lactis* (par exemple, la souche I-2843 disponible auprès de la CNCM),
- des *Bifidobacterium*, telles que les :
   ■ *Bifidobacterium animalis lactis* (par exemple, la souche I-2494 disponible auprès de la CNCM, ou la souche commercialisée sous la référence BB12® par Chr. Hansen),
   ■ *Bifidobacterium breve,*
   ■ *Bifidobacterium bifidum,*
   ■ *Bifidobacterium longum*,
   ■ *Bifidobacterium infantis*.

Les bactéries lactiques probiotiques ne sont pas de simples additifs alimentaires, qu'il suffirait d'ajouter en masse au produit laitier. Il s'agit de bactéries vivantes, qui mènent une fermentation acidifiante, et dont le métabolisme est affecté par les conditions sous lesquelles elles se trouvent lors de la fabrication du produit laitier fermenté, puis ensuite lors de la conservation du produit laitier fermenté jusqu'à la date limite de consommation (DLC).
Les dates limites de consommation dépendent des durées légales de conservation fixées par la législation en vigueur. Pour les produits laitiers fermentés frais, tels que les laits fermentés, la DLC est généralement de 30 jours à compter de la date de fabrication.

Par ferment, bactérie ou souche technique, il est ici entendu un ferment, bactérie ou souche qui participe à la structure et/ou à la texture du produit laitier fermenté, par opposition au ferment, bactérie ou souche à fonction essentiellement probiotique.
Par exemple, on peut produire un lait fermenté par fermentation symbiotique *L. bulgaricus* - *S. thermophilus,* en mettant également en oeuvre au moins une souche de *B. animalis lactis* à titre de souche probiotique. Dans ce cas de figure, les souches dites techniques sont les souches de *S. thermophilus* et *L. bulgaricus*.

### Démarche et aspects de l'invention :

L'invention est relative à un inoculum qui est spécialement adapté à l'ensemencement direct d'au moins une souche de *Bifidobacterium animalis* ssp. *lactis* dans un substrat laitier, pour la transformation de ce substrat laitier en produit laitier fermenté qui est adapté à la consommation humaine et qui est à valeur probiotique, ainsi qu'aux utilisations de cet inoculum dans le cadre de la production de tels produits laitiers.
L'inoculum selon l'invention est plus particulièrement adapté à la production de produit laitier fermenté, qui est obtenu par fermentation d'un substrat laitier par le probiotique *B. animalis lactis,* et par la symbiose *S. thermophilus* - *L. bulgaricus*. Un tel produit contient alors au moins une souche de *S. thermophilus,* au moins une souche de *L. bulgaricus* et au moins une souche de *B. animalis lactis* sous forme vivante.

L'inoculum selon l'invention comprend au moins une souche de *B. animalis lactis*.

L'inoculum selon l'invention comprend une cystéine particulière, à savoir de la L-cystéine qui est sous une forme telle que les granules et/ou lyophilisat(s) qui sont obtenus en utilisant cette forme de L-cystéine sont tels que le pH de la solution obtenue après :
- décongélation dudit(desdits) granule(s), et/ou
- re-solubilisation dudit(desdits) lyophilisat(s) dans une proportion allant de 1 à 2 gramme(s) de lyophilisat(s) pour 8 à 10 mL d'H₂O,
est au moins égal à 4.
De préférence, ce pH ne dépasse pas le pH de 8.
Pour ce faire, on choisira de préférence une L-cystéine sous une forme telle qu'elle présente un pH qui est au-dessus de 4 lorsqu'elle est en placée en solution. Par exemple, une solution contenant 1,25 gramme de cette forme de cystéine pour 50 mL d'H₂O présente un pH qui va de 4,5 à 5,5.
Un exemple d'une telle forme de cystéine est la L-cystéine communément appelée L-cystéine base (ou L-cystéine sous forme base). Sous forme réduite, la L-cystéine base a pour formule HSCH₂CH(NH₂)CO₂H.
La L-cystéine base n'est pas de la cystéine-HCl: elle n'est donc ni un chlorhydrate de cystéine, ni un chlorhydrate monohydraté de cystéine.
Le choix de cette cystéine particulière résulte d'une sélection faite parmi les différentes formes de cystéine disponibles.
Cette cystéine particulière est assimilable par *B. animalis lactis*, et est un activateur de la croissance de *B. animalis lactis* sur substrat laitier.
Cette cystéine particulière est adaptée à la consommation humaine. Elle est conforme aux législations relatives aux produits laitiers fermentés destinés à la consommation humaine.
Cette cystéine particulière permet en outre de stimuler la croissance, ou à tout le moins de métabolisme de *B. animalis lactis*, sans perturber le métabolisme d'autres bactéries lactiques non probiotiques, et notamment sans perturber la fermentation lactique symbiotique exercée par *S. thermophilus* et *L. bulgaricus*.

En sus de toutes ces propriétés, cette cystéine particulière permet de produire un inoculum dit intégré qui comprend à la fois ladite au moins une souche de *B. animalis lactis* et la cystéine dans un même unité physique, sans que la croissance, ou à tout le moins le métabolisme, de cette souche de *B. animalis lactis* n'en soit négativement affecté.
De manière très préférentielle, l'inoculum selon l'invention ne comprend pas de cystéine sous forme acide, telle que la cystéine-HCl (chlorohydrate de L-cystéine de formule HSCH₂CH(NH₂)CO₂H•HCl).

L'inoculum selon l'invention se présente sous une forme physique particulière. Il se présente sous la forme de granule(s) congelé(s) et/ou lyophilisat(s).
Cette forme particulière d'inoculum est spécialement adaptée à l'ensemencement direct.
Le choix de la cystéine particulière ci-dessus mentionnée permet de fabriquer l'inoculum sous ces particulières, et d'obtenir un inoculum particulièrement actif.
Le choix de la L-cystéine particulière de l'invention permet mélanger ladite au moins une souche de *B. animalis lactis* et ladite cystéinè ensemble, pour produire des granules congelés et/ou lyophilisat(s) qui comprennent à la fois cette souche de *B. animalis lactis* et cette cystéine au sein de mêmes granules et/ou au sein d'un même lyophilisat, sans que la croissance, ou à tout le moins le métabolisme, de cette souche de *B. animalis lactis* n'en soit négativement associé.
De tels résultats ne peuvent être atteints en utilisant de la cystéine sous forme acide, telle que la cystéine-HCl (chlorohydrate de L-cystéine de formule HSCH₂CH(NH₂)CO₂H•HCl), en lieu et place de la L-cystéine base.

Les inventeurs proposent ainsi un granule congelé ou un lyophilisat, dans lequel se trouvent à la fois des cellules de ladite au moins une souche de *B. animalis lactis* et de ladite L-cystéine particulière. Ce granule congelé ou lyophilisat peut être qualifié d'inoculum de *B. animalis lactis* à activateur intégré. Ce granule congelé ou lyophilisat est un mode de réalisation préféré de l'invention.

Une alternative à la voie de l'intégration de l'activateur peut consister à ne pas associer l'activateur au sein d'un même granule ou lyophilisat avec la souche de *B. animalis lactis*, mais à produire des granules congelés ou lyophilisats distincts.

On peut, par exemple, produire et combiner ensemble, par exemple sous forme de mélange ou d'association (« kit-of-parts ») :
- des granules congelés contenant des cellules de ladite au moins une souche de *B. animalis lactis*, et des granules congelés distincts contenant ladite L-cystéine particulière (= granules non intégrés mais combinés) ; ou
- un lyophilisat contenant des cellules de ladite au moins une souche de *B. animalis lactis*, et un lyophilisat contenant ladite L-cystéine particulière (=lyophilisats non intégrés, mais combinés) ; ou
- des granules congelés contenant des cellules de ladite au moins une souche de *B, animalis lactis*, et un lyophilisat contenant ladite L-cystéine particulière, ou inversement (= combinaison de granules et de lyophilisat(s)); ou bien encore
- un mélange de ces alternatives,
Ces inoculums sont des alternatives directes au granule congelé ou lyophilisat intégré, dans la mesure où ils consistent à combiner ensemble les moyens de l'invention, mais sous des formes physiques distinctes.
Ces inoculums sont ici qualifiés de « combinés », et entrent dans le champ de la présente demande.

La figure 1 donne une illustration du mode de production de granules intégrés selon l'invention, et du mode de production de granules combinés selon l'invention.

L'invention résulte ainsi de la combinaison d'une sélection de cystéine particulière (préférentiellement, L-cystéine base) et de la mise au point d'une forme physique particulière (granules congelés et/ou lyophilisat(s)), qui est spécialement adaptée à l'ensemencement direct.

L'inoculum selon l'invention est en outre spécialement adapté à la stimulation de la croissance des souches de *B. animalis lactis*. Il peut ne pas être adapté à la stimulation d'autres espèces ou genres de bactéries probiotiques.

Pour stimuler la croissance des souches de *B. animalis lactis*, il faut disposer d'un activateur de croissance qui exerce un effet positif sur la croissance, ou à tout le moins sur le métabolisme, de *B. animalis lactis*, sans pour autant exercer un effet négatif ou délétère sur la texture, ni la structure, ni la qualité sanitaire et gustative du produit laitier fermenté obtenu.
Ce problème est particulièrement délicat, lorsqu'il s'agit de produire des produits laitiers fermentés qui, en sus de *B. animalis lactis*, nécessitent de mettre en oeuvre d'autres bactéries lactiques.
Chacune des bactéries lactiques mises en oeuvre n'ont en effet pas nécessairement toutes le même métabolisme, et des conditions favorables à une espèce ou un genre ne sont pas nécessairement favorables à une autre espèce ou un autre genre.
Ainsi, il peut être délicat de trouver des conditions de fermentation lactique qui conviennent à l'ensemble des souches mises en oeuvre.
A cet élément, s'ajoute le fait que la fermentation lactique doit répondre à des contraintes de cinétique d'acidification bien particulière, pour parvenir à fabriquer un produit laitier fermenté sain et de qualité.
Il est souhaitable d'obtenir un pH de 5,5 aussi rapidement que possible, de manière à limiter les divers risques de contaminations. Une cinétique rapide d'acidification va toutefois à l'encontre d'une bonne croissance et/ou d'un bon métabolisme de *B. animalis lactis*.

Le cas des laits fermentés obtenus par fermentation de *S. thermophilus* et *L. bulgaricus*, et en outre, par fermentation du probiotique *B. animalis lactis*, est particulièrement délicat, dans la mesure où, en sus de la fermentation de *B. animalis lactis*, doit être menée une fermentation lactique symbiotique qui implique au moins une souche de *Streptococcus thermophilus,* et au moins une souche de *Lactobacillus delbrueckii* ssp. *bulgaricus*.
Or, *B. animalis lactis* est une espèce à croissance lente sur substrat laitier (temps de génération de l'ordre de 1 à 2 heures), alors que les ferments techniques *S. thermophilus* et *L. bulgaricus* sont à croissance rapide (temps de génération de l'ordre de 15 à 30 min).
Dans ces circonstances, il est particulièrement complexe de parvenir à maîtriser l'ensemble des paramètres.

L'inoculum selon l'invention est donc spécialement conçu pour ne pas exercer d'effet négatif sur la fermentation qui pourrait être menée par des souches de bactéries lactiques dites techniques, et notamment sur la fermentation symbiotique de *Streptococcus thermophilus,* et de *Lactobacillus delbrueckii* ssp. *bulgaricus*.
Ainsi, l'inoculum selon l'invention est spécialement adapté à une mise en oeuvre dans le cadre de la production d'un lait fermenté qui comprend au moins une souche de *B. animalis lactis* à titre de souche probiotique, et qui est obtenu par fermentation d'un substrat laitier par au moins une souche de *Streptococcus thermophilus,* et au moins une souche de *Lactobacillus delbrueckii* ssp. *bulgaricus,* en sus de la fermentation opérée par *B. animalis lactis*.

L'inoculum selon l'invention répond aux différentes contraintes, et permet d'obtenir un produit laitier fermenté à haute valeur probiotique, qui est de qualité exceptionnelle.

Ceci étant, le fait que l'inoculum selon l'invention soit optimisé pour la situation particulièrement complexe posée par la fermentation symbiotique de *S. thermophilus* et *L. bulgaricus* en présence d'une fermentation de *B. animalis lactis*, n'empêche évidemment pas de l'utiliser dans des situations moins complexes, telles que celle de la fermentation d'un substrat laitier qui ne mettrait en oeuvre qu'un genre ou espèce de bactérie lactique autre que *B. animalis lactis*, en sus de ladite au moins une souche de *B. animalis lactis*, ou qui ne mettrait en oeuvre que des souches de *B. animalis lactis*.

Un des avantages de l'inoculum selon l'invention est qu'il permet d'obtenir une population de ladite au moins une souche de *B. animalis lactis* (ou, s'il y en a plusieurs, desdites souches de *B. animalis lactis*), qui est nettement supérieure à celle qui serait obtenue dans les mêmes conditions mais en utilisant un inoculum classique de la même souche de *B. animalis lactis* sans activateur de croissance, et est également nettement supérieure à celle qui serait obtenue dans les mêmes conditions mais en utilisant un inoculum de la même souche de *B. animalis lactis* et de la cystéine-HCl à titre d'activateur de croissance.

L'inoculum selon l'invention permet ainsi d'obtenir une population de ladite au moins une souche de *B. animalis lactis* (ou, s'il y en a plusieurs, desdites souches de *B. animalis lactis*), qui est d'au moins 5.10⁷ ufc par gramme de produit fermenté en fin de fermentation, de préférence d'au moins 10⁸ ufc par gramme de produit fermenté en fin de fermentation.
De manière remarquable, l'inoculum selon l'invention présente l'avantage de permettre d'obtenir une population de ladite au moins une souche de *B. animalis lactis* (ou, s'il y en a plusieurs, desdites souches de *B. animalis lactis*), qui ne descend pas au-dessous de 5.10⁷ ufc par gramme de produit fermenté, après au moins 20 jours, de préférence au moins 30 jours de conservation dudit produit fermenté à une température comprise entre 4 et 11°C, de préférence à une température comprise entre 4 et 10°C, très préférentiellement à une température comprise entre 4 et 9°C.
De manière particulièrement remarquable, l'inoculum selon l'invention présente l'avantage de permettre d'obtenir une population de ladite au moins une souche de *B. animalis lactis* (ou, s'il y en a plusieurs, desdites souches de *B. animalis lactis*), qui ne descend pas au-dessous de 10⁸ ufc par gramme de produit fermenté, après au moins 20 jours, de préférence au moins 30 jours de conservation dudit produit fermenté à une température comprise entre 4 et 11°C, de préférence à une température comprise entre 4 et 10°C, très préférentiellement à une température comprise entre 4 et 9°C : *cf*. Figures 8 et 9, illustrant le maintien jusqu'à au moins 30 jours de conservation à 10°C de la population de *B. animalis lactis* dans des laits fermentés (*S. thermophilus* - *L. bulgaricus + B. animalis lactis*) produits à l'aide d'un inoculum conforme à l'invention, par comparaison aux laits fermentés témoins, dont la population de *B. animalis lactis* chute rapidement à compter du 21^{ème} jour.

Un autre avantage de l'inoculum selon l'invention est qu'il se présente sous une forme qui est adaptée à une mise en oeuvre dans un contexte industriel.
En effet, l'inoculum selon l'invention est sous une forme perfectionnée qui permet de le mettre en oeuvre de manière particulière sûre et facile dans le cadre d'une production industrielle de produit laitier fermenté.

Les doses d'activateurs de croissance et les écarts acceptés peuvent être parfois délicats à maîtriser en regard des systèmes de mesures et d'incorporation utilisés pour réaliser les produits laitiers fermentés en milieu industriel. Par exemple, un excès d'activateur, s'il est bénéfique pour la souche probiotique, est généralement très néfaste à la qualité du produit laitier fermenté obtenu : il peut conférer un goût non apprécié (par exemple, goût soufré pour de la cystéine versée en excès), il peut exercer des effets négatifs ou délétères sur la fermentation des souches techniques (c'est par exemple le cas pour *S. thermophilus,* lorsqu'un excès de cystéine est utilisé). La maîtrise des quantités d'activateur ajouté présente également un intérêt sur le plan sanitaire, dans la mesure où cette maîtrise limite les interventions humaines, et les modifications et adaptations de circuits industriels, dont la qualité sanitaire doit être absolument garantie. La maîtrise des quantités d'activateur ajouté présente bien sûr également un intérêt économique.
Il peut donc se trouver que la personne du métier dispose d'un activateur de croissance adapté, mais qu'elle connaisse des difficultés lors de sa mise en oeuvre en milieu industriel, car la maîtrise de la quantité d'activateur ajouté apparaît délicate dans ce contexte.
L'inoculum selon l'invention est quant à lui très aisé à mettre en oeuvre dans un contexte industriel, et permet de maîtriser de manière sûre et simple les quantités d'activateur mises en oeuvre. L'inoculum selon l'invention est donc plus aisé à mettre, et permet de fabriquer de manière efficace et sûre en milieu industriel des produits laitiers fermentés qui présentent d'excellentes qualités texturale, structurale et gustative, et qui contiennent le probiotique *B. animalis lactis* à dose particulièrement élevée.

L'inoculum de l'invention est le résultat d'un compromis délicat entre notamment :
- l'exigence de préserver d'excellentes qualités du produit laitier fermenté pour le consommateur (qualités de structure, de texture, qualités sanitaires, qualités gustatives),
- le souhait d'encore améliorer la teneur en *B. animalis lactis*, de sorte à accentuer les effets probiotiques du produit, et
- la volonté de disposer d'un inoculum sous forme perfectionnée, qui est spécialement adapté à l'ensemencement direct, et qui permet de maîtriser en toute sécurité et en toute simplicité les quantités d'activateurs ajoutés.

L'inoculum selon l'invention répond à ces différents objectifs.

L'inoculum selon l'invention comprend en mélange ou sous forme de collection (« kit-of-parts ») :
- au moins une souche de *B. animalis lactis*, et
- de la L-cystéine dite sous forme libre (c'est-à-dire de la L-cystéine qui est non liée à d'autres acides aminés par liaison peptidique), cette L-cystéine sous forme libre étant en outre sous une forme telle qu'elle permet d'obtenir des granules et/ou lyophilisat(s) qui sont tels que le pH de la solution obtenue après :
   o décongélation dudit(desdits) granule(s), et/ou
   o re-solubilisation dudit(desdits) lyophilisat(s) dans une proportion allant de 1 à 2 gramme(s) de lyophilisat(s) pour 8 à 10 mL d'H₂O,
   est au moins égal à 4.
De préférence, ce pH ne dépasse pas le pH de 8.
Pour ce faire, on choisira de préférence une L-cystéine libre qui est sous une forme telle qu'elle présente un pH qui est au-dessus de 4 lorsqu'elle est en placée en solution. Par exemple, une solution contenant 1,25 gramme de cette forme de cystéine pour 50 mL d'H₂O présente un pH qui va de 4,5 à 5,5.
Un exemple préféré d'une telle forme de cystéine est la L-cystéine communément appelée L-cystéine base (ou L-cystéine sous forme base). Sous forme réduite, la L-cystéine base a pour formule HSCH₂CH(NH₂)CO₂H.

Les quantités de L-cystéine particulière conforme à l'invention et de cellules de *B. animalis lactis* contenues dans l'inoculum de l'invention sont réparties au sein de structures physiques solides, à savoir des granules congelés et/ou un(des) lyophilisat(s).

Ladite cystéine et ladite au moins une souche de *B. animalis lactis* peuvent être contenues ensemble dans une même structure solide, ou bien être présentes dans des structures solides distinctes. Ces structures solides distinctes peuvent elles-mêmes être conditionnées de manière séparée mais en collection, ou bien être en mélange.
Bien entendu, un mélange de structure solide commune, contenant à la fois de la L-cystéine particulière conforme à l'invention et des cellules de *B. animalis lactis*, et de structures solides distinctes pourrait être réalisé.

Ladite cystéine et ladite au moins une souche de *B. animalis lactis* peuvent donc être :
- ensemble au sein de mêmes granules congelés et/ou ou au sein d'un même lyophilisat, et/ou
- séparées, mais en collection (« kit-of-parts »), au sein de granules congelés distincts et/ou lyophilisat(s) distincts.

Ainsi, et selon un mode avantageux de réalisation de l'invention, tout ou partie de ladite L-cystéine particulière et des cellules de *B. animalis lactis* peuvent être ensemble au sein de mêmes granules congelés, ou au sein d'un même lyophilisat. L'inoculum de l'invention comprend alors au moins un granule congelé et/ou un lyophilisat, qui contient à la fois de la L-cystéine particulière conforme à l'invention et des cellules de *B. animalis lactis*.
De manière préférée, c'est l'ensemble des quantités de L-cystéine particulière et de cellules de *B. animalis lactis* contenues dans l'inoculum qui sont ensemble au sein de mêmes granules congelés, ou au sein d'un même lyophilisat.

Tout ou partie de ladite. L-cystéine particulière conforme à l'invention et des cellules de *B. animalis lactis* peuvent être physiquement séparées, mais en collection (« kit-of-parts »), au sein de granules congelés distincts et/ou lyophilisat(s) distincts. L'inoculum de l'invention comprend alors :
- au moins deux granules congelés, ou
- au moins deux lyophilisats distincts, ou
- au moins un granulé congelé et au moins un lyophilisat,
qui chacun contiennent soit de la cystéine particulière conforme à l'invention, soit des cellules de *B. animalis lactis*, de sorte que, pour chacune de ces paires d'entités physiques (granule + granule ; ou lyophilisat + lyophilisat distinct ; ou granule + lyophilisat):
- l'une des deux entités physiques contient tout ou partie de ladite L-cystéine particulière, sans contenir de cellules de *B. animalis lactis*, et
- l'autre des deux entités physiques qui contient des cellules de *B. animalis lactis*, sans contenir de ladite L-cystéine particulière.

Bien entendu, l'ensemble de la quantité de L-cystéine particulière conforme à l'invention et l'ensemble des cellules de *B. animalis lactis* contenues dans l'inoculum peuvent ainsi être contenues, ou se présenter sous la forme de granule(s) distinct(s) et/ou lyophilisat(s) distinct(s).

L'inoculum selon l'invention peut donc comprendre, ou être constitué des éléments suivants :
**a)** granules congelés contenant L-cystéine particulière conforme à l'invention et cellules de *B. animalis lactis*,
**b)** lyophilisat contenant L-cystéine particulière conforme à l'invention et cellules de *B. animalis lactis,*
**c)** granules congelés contenant de la L-cystéine particulière conforme à l'invention, mais pas de cellules de *B. animalis lactis*, et des granules congelés contenant des cellules de *B. animalis lactis* mais pas de L-cystéine particulière conforme à l'invention,
**d)** lyophilisat contenant de la L-cystéine particulière conforme à l'invention, mais pas de cellules de *B. animalis lactis*, et lyophilisat contenant des cellules de *B. animalis lactis* mais pas de L-cystéine particulière conforme à l'invention,
**e)** granules congelés contenant de la L-cystéine particulière conforme à l'invention, mais pas de cellules de *B. animalis lactis*, et lyophilisat contenant des cellules de *B. animalis lactis* mais pas de L-cystéine particulière conforme à l'invention,
**f)** lyophilisat contenant de la L-cystéine particulière conforme à l'invention mais pas de cellules de *B. animalis lactis,* et granules congelés contenant des cellules de *B. animalis lactis* mais pas de L-cystéine particulière conforme à l'invention,
**g)** ou d'un mélange d'au moins deux des formulations présentées sous a) à f) ci-dessus.

L'inoculum selon l'invention contient de la cystéine dite sous forme libre (c'est-à-dire non liée à d'autres acides aminés par des liaison peptidique), qui résulte d'une sélection particulière opérée par les inventeurs.
En effet, ladite cystéine sous forme libre est une L-cystéine libre qui, en outre, est sous une forme telle qu'elle permet d'obtenir des granules et/ou lyophilisat(s) qui sont tels que le pH de la solution obtenue après :
- décongélation dudit(desdits) granule(s) (par exemple, en plaçant les granules au bain-marie à 37°C pendant 3 min sous agitation manuelle), et/ou
- re-solubilisation dudit(desdits) lyophilisat(s) dans une proportion allant de 1 à 2 gramme(s) de lyophilisat(s) pour 8 à 10 mL d'H₂O (par exemple, avec réhydratation pendant 30 min à 25°C sous agitation magnétique),
est au moins égal à 4.
Pour ce faire, on choisira de préférence une L-cystéine sous une forme telle que le pH d'une solution constituée de 1 à 1,5 gramme(s) de cette cystéine dans 50 à 100 mL d'H₂O est au moins égal à 4.
Un exemple d'une cystéine appropriée est la L-cystéine communément appelée L-cystéine base, dont la formule sous forme réduite est HSCH₂CH(NH₂)CO₂H.
Un exemple d'une cystéine non appropriée est la cystéine-HCl (chlorhydrate de cystéine, ou chlorhydrate monohydraté de cystéine).

De préférence, aucun des composés utilisés pour fabriquer l'inoculum selon l'invention n'est sous forme chlorhydratée.

La L-cystéine particulière conforme à l'invention qui est contenue dans l'inoculum de l'invention n'est pas une cystéine acide, telle que le chlorohydrate de L-cystéine (HSCH₂CH(NH₂)CO₂H•HCl) ou le chlorhydrate monohydraté de L-cystéine (HSCH₂CH(NH₂)CO₂H•HCl•H₂O).

Le chlorohydrate monohydraté de L-cystéine n'est pas une cystéine particulière conforme à l'invention, car une solution constituée de 1,0 g de chlorohydrate monohydraté de L-cystéine dans 100 mL d'H₂O a un pH de 1,5 à 2,0.
Ainsi, la décongélation de granules congelés, ou la re-solubilisation d'un lyophilisat, qui auraient(aurait) été produit(s) à partir d'une cystéine qui ne serait pas une cystéine particulière conforme à l'invention, conduirait à une solution dont le pH est très acide, plus particulièrement dont le pH est inférieur à 4, généralement inférieur à 3,5.
La plupart des cystéines sous forme très acide sont des cystéines sous forme de sels, telles que le chlorohydrate de L-cystéine, ou le chlorhydrate monohydraté de L-cystéine. Le ou les ions participant à ce sel se retrouvent dans le granulé congelé ou lyophilisat. La présence de cet ou ces ions peut donc parfois constituer un marqueur de l'utilisation d'une cystéine qui est combinée à une entité acide (laquelle a généralement pour fonction d'augmenter la solubilité de la cystéine). C'est par exemple le cas avec les ions chlore contenus dans le chlorohydrate de L-cystéine, ou le chlorhydrate monohydraté de L-cystéine. En effet, si une cystéine acide du chlorohydrate de L-cystéine, ou du chlorhydrate monohydraté de L-cystéine, est utilisé, on peut constater que le granule ou le lyophilisat contient une forte quantité de chlorure (CI), étant donné que le chlorhydrate monohydraté de L-cystéine contient plus de 19% de chlorure, et que la L-cystéine base en contient en général moins de 0,05%, plus particulièrement moins de 0,040%. La présence forte de chlorure dans le granule ou le lyophilisat peut ainsi constituer un marqueur indirect de l'utilisation d'une cystéine qui n'est pas une cystéine base. Ainsi, la forme de cystéine utilisée dans un inoculum selon l'invention apportera généralement moins de 60 microgrammes d'ions chlore par gramme de granules à 16-17% de matière sèche.

Ceci étant, le critère premier qui s'applique est celui du pH. La mesure du pH constitue en effet le critère direct de détection de la présence d'une cystéine particulière conforme à l'invention: le pH des granules décongelés, ou du lyophilisat re-solubilisé, est alors au moins égal à 4. Il est en général au moins égal à 5, par exemple entre 5 et 6,5. De préférence, ce pH ne dépasse pas le pH de 8.

Un pH qui est au moins égal à 4 et au plus égal à 8 n'est pas stressant pour *B. animalis lactis. B. animalis lactis* peut alors être placé en mélange dans la solution de cystéine sans subir de stress, et être formulé en granules congelés ou lyophilisat qui intègre cystéine et cellules de *B. animalis lactis* au sein d'une structure physique solide. L'inoculum de *B. animalis lactis* qui en résulte contient alors des cellules de *B. animalis lactis* qui sont en bon état physiologique et/ou métabolique, et qui répondent rapidement à l'activation exercée par la cystéine.
Un granule congelé ou un lyophilisat « intégré » de l'invention, qui contient à la fois des cellules de *B. animalis lactis* et de la L-cystéine particulière conforme à l'invention, est donc un inoculum de *B. animalis lactis* particulièrement perfectionné, dans la mesure où il parvient à intégrer un activateur de *B. animalis lactis* dans sa structure, sans pour autant altérer l'état physiologique et/ou le métabolisme des cellules de *B. animalis lactis*.

La sélection de la L-cystéine particulière conforme à l'invention permet d'obtenir des granules et/ou lyophilisats qui sont plus efficaces que ne le seraient des granules et/ou lyophilisats formulés à partir de L-cystéine sous forme très acide, telle que du chlorohydrate de L-cystéine.
C'est également cette sélection qui permet d'intégrer la cystéine de manière efficace au sein de mêmes granules congelés, ou au sein d'un même lyophilisat. En effet, lorsqu'on utilise de la cystéine sous forme très acide, telle que du chlorohydrate de L-cystéine, pour formuler un granule congelé ou un lyophilisat qui comprend à la fois cystéine-HCl et cellules de *B. animalis lactis*, le granule intégré ou le lyophilisat intégré résultant est un inoculum peu efficace de *B. animalis lactis*, comparé au même granule ou lyophilisat obtenu à partir de L-cystéine particulière conforme à l'invention.

Selon un mode préféré de réalisation de l'invention, l'inoculum de l'invention de comprend donc pas de cystéine très acide, et plus particulièrement pas de chlorohydrate de L-cystéine, et/ou n'est pas fabriqué à partir d'une telle cystéine.

L'inoculum selon l'invention n'est pas non plus destiné à comprendre de la cystine. De préférence, on n'ajoutera donc pas de cystine dans l'inoculum de l'invention. Toutefois, des traces de cystine peuvent y être trouvées, mais elles seraient le fait par exemple d'une oxydation de la cystéine contenue dans l'inoculum.

Avantageusement, ladite L-cystéine particulière conforme à l'invention est présente dans l'inoculum en une quantité allant :
- de 1 gramme pour 1.10¹⁴ *ufc* de ladite au moins une souche de *B. animalis lactis* (ou, s'il y en a plusieurs, desdites souches de *B. animalis lactis*),
- à 1 gramme pour 3,5.10¹⁰ *ufc* de ladite au moins une souche de *B. animalis lactis* (ou, s'il y en a plusieurs, desdites souches de *B. animalis lactis*) ;
et/ou en une quantité allant :
- de 0,01 milligramme par milliard de *ufc* de ladite au moins une souche de B. *animalis lactis* (ou, s'il y en a plusieurs, desdites souches de *B. animalis lactis*),
- à 30 milligrammes par milliard de *ufc* de ladite au moins une souche de *B. animalis lactis* (ou, s'il y en a plusieurs, desdites souches de *B. animalis lactis*).

Dans la présente demande, toutes les masses de cystéine sont calculées sur la base d'une cystéine de formule HSCH₂CH(NH₂)CO₂H.

Préférentiellement, ladite L-cystéine particulière conforme à l'invention est présente dans ledit inoculum en une quantité allant :
- de 1 gramme pour 0,2.10¹⁴ *ufc* de ladite au moins une souche de *B. animalis lactis* (ou, s'il y en a plusieurs, desdites souches de *B. animalis lactis*).
- à 1 gramme pour 10.10¹⁰ *ufc* de ladite au moins une souche de *B. animalis lactis* (ou, s'il y en a plusieurs, desdites souches de *B. animalis lactis*) ;
et/ou en une quantité allant :
- de 0,05 milligramme par milliard de *ufc* de ladite au moins une souche de *B. animalis lactis* (ou, s'il y en a plusieurs, desdites souches de *B. animalis lactis*),
- à 10 milligrammes par milliard de *ufc* de ladite au moins une souche de *B. animalis lactis* (ou, s'il y en a plusieurs, desdites souches de *B. animalis lactis*).

Selon un mode particulier de réalisation de l'invention, ladite L-cystéine particulière conforme à l'invention est présente dans ledit inoculum en une quantité allant de 4,90 mg à 144 mg pour 5.10⁹ à 5.10¹¹ *ufc* de ladite au moins une souche de *B. animalis lactis*.

Préférentiellement, ladite L-cystéine particulière conforme à l'invention est présente dans ledit inoculum en une quantité allant de 25 à 50 mg, plus préférentiellement, de 30 à 40 mg, encore plus préférentiellement de 31 à 39 mg, par exemple environ 31, 32, 33, 34, 35, 36, 37, 38, 39 mg, très préférentiellement de 35 à 37 mg, par exemple environ 35, 36, 37 mg, de façon particulièrement préférée, environ 36,9 mg, pour 5.10⁹ à 5.10¹¹ *ufc* de ladite au moins une souche de *B. animalis lactis*.

Préférentiellement, le nombre d'ufc de *B. animalis lactis* est de 5.10⁹ à 5.10¹¹ ufc, plus préférentiellement, de 2.10¹⁰ à 5.10¹¹ ufc de *B. animalis lactis*, très préférentiellement, de 2.10¹⁰ à 1.10¹¹ ufc de *B. animalis lactis*, encore plus préférentiellement, de 2.10¹⁰ à 7.10¹⁰ ufc de *B. animalis lactis*.

Avantageusement, 1 gramme de granules conformes à l'invention, qui comprendraient à 16-17% de matière sèche (matière sèche à 105°C pendant au moins 40 min), comprend de 5.10⁹ à 5.10¹¹ *ufc* de ladite au moins une souche de *B. animalis lactis*.
Avantageusement, 1 gramme de granules conformes à l'invention, qui comprendraient 16-17% de matière sèche (matière sèche à 105°C pendant au moins 40 min), comprend de 4,90 mg à 144 mg de ladite L-cystéine particulière conforme à l'invention, de préférence de L-cystéine base.

Avantageusement, une quantité de 160 à 170 milligrammes d'un lyophilisat conforme à l'invention comprend de 5.10⁹ à 5.10¹¹ *ufc* de ladite au moins une souche de *B. animalis lactis*.
Avantageusement, une quantité de 160 à 170 milligrammes d'un lyophilisat conforme à l'invention comprend de 4,90 mg à 144 mg de ladite L-cystéine particulière conforme à l'invention.

Pour dénombrer les colonies formant unité (ufc) de *B. animalis lactis*, on peut utiliser toute technique que la personne du métier trouverait appropriée, par exemple la méthode de numération des bifidobactéries décrite dans Grand et al. 2003 (Eur. Food Res. Technol. 217 : 90-92). De préférence, on utilise la méthode décrite dans S.N. Thitaram, G.R. Siragusa et A. Hinton, 2005 (Jr Letters in Applied Microbiology, Volume 41 Page 355 - October 2005; "*Bifidobacterium-selective isolation and enumeration from chicken caeca by a modified oligosaccharide antibiotic-selective agar medium*").

Pour doser la cystéine contenue dans un liquide, on peut utiliser toute technique que la personne du métier trouverait appropriée, par exemple la chromatographie en phase gazeuse couplée à une spectrométrie de masse, ou une chromatographie liquide haute performance couplée à une détection fluorimétrique. On peut également doser la cystéine à l'aide d'un analyseur d'acides aminés tels que le L-8800 *High Speed Amino Acid Analyzer* (Hitachi High Technologies).

De préférence, l'inoculum selon l'invention ne comprend pas plus de 0,5% (p/p) de levure, d'extrait de levure ou d'autolysat de levure.
Préférentiellement, l'inoculum selon l'invention ne comprend pas plus de 0,5% (p/p) de levure, d'extrait de levure ou d'autolysat de levure. Très préférentiellement, ledit inoculum ne contient pas de levure, d'extrait de levure ou d'autolysat de levure.

Avantageusement, l'invention permet de formuler un inoculum de *B. animalis lactis* qui est très actif, et qui génère une population de *B. animalis lactis* qui se maintient dans le temps (lors de la conservation du produit laitier fermenté à température réfrigérée), sans que l'on ait à utiliser de conservateur dans l'inoculum, et sans que l'on ait à ajouter un conservateur dans le substrat laitier, ou dans le produit laitier fermenté.
Grâce à l'invention, la population de *B. animalis lactis* se trouve dans le produit laitier fermenté dans un état physiologique et/ou métabolique particulièrement sain, qui lui permet de se maintenir à un fort niveau.

L'inoculum de l'invention comprend au moins une souche de *B. animalis lactis*, par exemple la souche I-2494 ou la souche BB12® de Chr. Hansen.
L'inoculum de l'invention peut bien sûr comprendre plusieurs souches de *B. animalis lactis*, par exemple la souche 1-2494 et la souche BB12® de Chr. Hansen.

L'inoculum selon l'invention peut en outre comprendre au moins une souche de bactérie lactique autre que *B. animalis lactis*.
Ladite au moins une autre souche de bactérie lactique peut être présente au sein des granules ou lyophilisat(s) qui contiennent des cellules de *B. animalis lactis* et/ou de la L-cystéine particulière conforme à l'invention.
Ladite au moins une autre souche de bactérie lactique peut être présente dans une structure physique distincte de celle qui contient les cellules de *B. animalis lactis*. Cette structure physique distincte peut par exemple être une structure solide, telle que des granules congelés ou un lyophilisat, qui sont en mélange avec les granules et/ou lyophilisat(s) de *B. animalis lactis* et L-cystéine particulière conforme à l'invention, ou qui en sont séparés mais en collection (« kit-of-parts »). Cette au moins une autre souche de bactérie lactique peut par exemple être présente sous forme de granules congelés, ou d'un lyophilisat, qui sont(est) distincts(distinct) des granules ou lyophilisat(s) de *B. animalis lactis* et de cystéine particulière conforme à l'invention.
Cette au moins une autre souche de bactérie lactique peut être une souche de *Bifidobacterium,* ou une souche d'un genre différent.
Cette souche de genre différent peut être une souche à fonction probiotique, par exemple au moins une souche choisie par les souches de *Lactobacillus acidophilus, Mactobacillus thamnosus, Lactobacillus casei*.
Cette souche de genre différent peut être une souche à fonction technique, telle que *S. thermophilus* et/ou *L. bulgaricus*.
Avantageusement, ledit inoculum selon l'invention comprend, en sus des granule(s) et/ou lyophilisat(s) de *B. animalis lactis* et L-cystéine particulière, un inoculum de *S. thermophilus* et *L. bulgaricus*, par exemple sous forme de granule(s) congelé(s) et/ou lyophilisat(s), adaptés à l'ensemencement direct.

De manière préférentielle, l'inoculum selon l'invention comprend plusieurs souches autres que *B. animalis lactis,* par exemple au moins deux, au moins trois, au moins quatre souches autres que *B. animalis lactis.*
Avantageusement ces autres souches sont au moins une souche de *S. thermophilus* (par exemple, la souche I-1630 disponible auprès de la CNCM), et au moins deux souches de *L. bulgaricus* (par exemple, les souches I-1632 et 1-1519 disponibles auprès de la CNCM). Un tel inoculum peut se présenter sous la forme d'un mélange ou d'une collection « kit-of-parts » de granules congelés et/ou lyophilisat(s) contenant *B. animalis lactis* et L-cystéine particulière conforme à l'invention, et de granules congelés et/ou lyophilisat(s) contenant *S. thermophilus* et/ou *L. bulgaricus.* L'ensemble est alors spécialement adapté à l'ensemencement direct d'un substrat laitier, en vue de sa transformation par fermentation lactique acidifiante symbiotique *S. thermophilus-L. bulgaricus* et par fermentation de *B. animalis lactis,* en un lait fermenté qui est à haute valeur probiotique, et qui maintient sa haute valeur probiotique lors de sa conservation en milieu réfrigéré.

La présente demande est également relative à un granule intégré selon l'invention en tant que tel, ainsi qu'à un lyophilisat intégré selon l'invention en tant que tel.
Comme indiqué et décrit ci-dessus, et/ou en partie exemples ci-dessous, un granule ou lyophilisat intégré selon l'invention comprend au moins une souche de *B. animalis lactis* et de la L-cystéine particulière conforme à l'invention, dans les doses et/ou proportions indiquées. De préférence, un tel granule ou lyophilisat ne comprend pas de cystéine sous forme très acide, telle que du monochlorate de L-cystéine.
La présente demande est ainsi relative à un granule congelé, qui comprend au moins une souche de *B. animalis lactis,* et de la L-cystéine qui est non liée à d'autres acides aminés par liaison peptidique, ladite L-cystéine étant sous une forme telle que le pH de la solution obtenue après décongélation dudit(desdits) granule(s) est au moins égal à 4, généralement supérieur à 5.
La présente demande est ainsi relative à un lyophilisat, qui comprend au moins une souche de *B. animalis lactis,* et de la L-cystéine qui est non liée à d'autres acides aminés par liaison peptidique, ladite L-cystéine étant sous une cystéine sous une forme telle que le pH de la solution obtenue après re-solubilisation dudit(desdits) lyophilisat(s) dans une proportion allant de 1 à 2 gramme(s) de lyophilisat(s) pour 8 à 10 mL d'H₂O, est au moins égal à 4, généralement supérieur à 5.
De préférence, le pH de granule ou lyophilisat est inférieur à 8 (pH de la solution obtenue après décongélation du granule, ou re-solubilisation du lyophilisat).

L'invention est également relative aux utilisations de l'inoculum selon l'invention.
L'invention est plus particulièrement relative à ses utilisations dans le cadre d'une fermentation lactique acidifiante, encore plus particulièrement à ses utilisations dans le cadre de la fabrication de produits laitiers fermentés destinés à la consommation humaine.

L'invention est ainsi relative à tout procédé qui met en oeuvre au moins un inoculum et/ou au moins un granule ou lyophilisat selon l'invention.

L'invention vise plus particulièrement un procédé de stimulation de la croissance et/ou du métabolisme de *B. animalis lactis* sur substrat laitier, qui met en oeuvre au moins un inoculum et/ou au moins un granule et/ou au moins un lyophilisat selon l'invention.
Ce procédé de stimulation présente l'avantage de stimuler *B. animalis lactis* de manière très efficace. Comme ci-dessus présenté, et comme ci-dessous illustré, le procédé de stimulation selon l'invention permet de produire une population de *B. animalis lactis* dont le métabolisme et/ou la croissance permettent un maintien de cellules vivantes de *B. animalis lactis* au cours du temps.
Pour mettre en oeuvre ce procédé, on apporte ledit inoculum dans des doses et/ou proportions telles qu'indiquées ci-dessus et/ou décrites dans les exemples et les figures qui suivent.
Avantageusement, on apporte ledit inoculum et/ou granule et/ou lyophilisat selon l'invention dans des quantités qui apportent au substrat laitier :
- 5 à 20 mg de cystéine par L de substrat laitier, préférentiellement, de 6 à 15 mg/L, plus préférentiellement de 7 à 11 mg/L,
   et
- 10⁹ à 10¹¹ ufc de *B. animalis lactis* par L de substrat, de préférence, de 0,4.10¹⁰ à 1.10¹¹ ufc de *B. animalis lactis,* plus préférentiellement, de 0,4.10¹⁰ à 1,2.10¹⁰ ufc de *B. animalis lactis,* très préférentiellement, de 0,4.10¹⁰ à 1.10¹⁰ ufc de *B. animalis lactis.*
Le substrat inoculé est de préférence maintenu dans des conditions de température et d'atmosphère favorables au métabolisme de *B. animalis lactis,* par exemple de 37°C à 42°C, dans un récipient clos).

L'invention vise également un procédé de production d'un produit laitier fermenté, préférentiellement d'un produit laitier obtenu par fermentation lactique, laquelle fermentation lactique comprenant au moins la fermentation symbiotique S. *thermophilus - L. bulgaricus,* en sus de la fermentation opérée par *B. animalis lactis*
Le procédé de l'invention comprend la mise en oeuvre d'au moins un inoculum et/ou au moins un granule et/ou au moins un lyophilisat selon l'invention. Le produit laitier fermenté obtenu est un produit laitier fermenté à haute valeur probiotique, car il contient une forte teneur en *B. animalis lactis,* et conserve une teneur haute lors de conservation en atmosphère réfrigérée.
Ce procédé de production présente l'avantage d'activer et/ou de stimuler *B. animalis lactis* de manière très efficace. Il présente également l'avantage de ne pas exercer d'effet négatif sur la symbiose *S. thermophilus* et *L. bulgaricus.*
Comme ci-dessus présenté, et comme ci-dessous illustré, le procédé de selon de production l'invention permet de produire une population de *B. animalis lactis* dont le métabolisme et/ou la croissance permettent un maintien de cellules vivantes de *B. animalis lactis* au cours du temps.
Pour mettre en oeuvre ce procédé, on apporte ledit inoculum dans des doses et/ou proportions telles qu'indiquées ci-dessus et/ou décrites dans les exemples et les figures qui suivent.
Avantageusement, on apporte ledit inoculum et/ou granule et/ou lyophilisat selon l'invention dans des quantités qui apportent au substrat laitier :
- 5 à 20 mg de cystéine par L de substrat laitier, préférentiellement, de 6 à 15 mg/L, plus préférentiellement de 7 à 11 mg/L,
   et
- 10⁹ à 10¹¹ ufc de *B. animalis lactis* par L de substrat, de préférence, de 0,4.10¹⁰ à 1.10¹¹ ufc de *B. animalis lactis,* plus préférentiellement, de 0,4.10¹⁰ à 1,2.10¹⁰ ufc de *B. animalis lactis,* très préférentiellement, de 0,4.10¹⁰ à 1.10¹⁰ ufc de *B. animalis lactis.*

Des doses de 0,05 g à 1 gramme de granules intégrés selon l'invention, par exemple d'environ 0,2 g de granules intégrés selon l'invention, sont des exemples de doses appropriées pour 1 litre de substrat laitier.

Le substrat inoculé est de préférence maintenu dans des conditions de température et d'atmosphère favorables au métabolisme de *B. animalis lactis,* par exemple de 37°C à 42°C, dans un récipient clos).
Ladite au moins une souche de *B. animalis lactis* tient le rôle de souche probiotique. Ceci étant, cette au moins une souche de *B. animalis lactis* doit pouvoir, elle aussi, mener une fermentation acidifiante du substrat laitier. Ladite au moins une souche de *B. animalis lactis* n'est donc pas simplement ajoutée dans le substrat ou produit laitier sans qu'on lui permette de mener une fermentation acidifiante, comme le serait un simple additif.

Avantageusement, le procédé de production de produit laitier fermenté peut comprendre la mise en oeuvre d'au moins une souche autre que ladite au moins une souche *de B. animalis lactis.*
Cette autre souche est de préférence une souche de bactérie lactique.
Ladite au moins une autre souche de bactérie lactique a notamment pour fonction de mener une fermentation lactique acidifiante. Elle est donc inoculée dans le substrat laitier de sorte à pouvoir conduire une fermentation lactique acidifiante, c'est-à-dire à un moment et dans des quantités qui lui permettent d'effectivement mener une fermentation lactique acidifiante.
Le procédé de fermentation de l'invention correspond donc à une fermentation mixte menée par ladite au moins une souche de bactérie lactique et par ladite au moins une souche de *B. animalis lactis,* et non à un simple procédé de fermentation lactique dans lequel *B. animalis lactis* serait ajouté comme un simple additif sans action fermentaire détectable.
Ladite au moins une souche de bactérie lactique et ladite au moins une souche de *B. animalis lactis* se trouvent donc ensemble dans le substrat laitier.

Selon un aspect avantageux de l'invention, le procédé de production peut ainsi ne pas être un procédé dit à deux étapes (« two-step process ») : l'ajout de ladite au moins une souche de *B. animalis lactis* et des éventuelles autres souches de bactéries lactiques peut être réalisé en même temps, ou à tout le moins sensible à la même étape du procédé, à savoir au début du procédé, sans avoir à attendre et à contrôler que la fermentation menée par une des souches soient parvenues à un certain stade, pour décider d'ajouter la ou les autres souches.

La fermentation du substrat laitier est menée à une température appropriée aux souches mises en oeuvre, et est généralement menée à une température comprise entre 36°C et 42°C.
Cette fermentation est généralement menée jusqu'à l'obtention d'un pH compris entre 4,8 et 4,2.

Le procédé de production de produit laitier fermenté selon l'invention peut par ailleurs comprendre une ou plusieurs autres étapes, par exemple une ou plusieurs autres étapes choisies parmi les étapes classiques de production de produit laitier fermenté concerné.
Il peut par exemple s'agir d'une ou plusieurs étapes parmi les étapes suivantes :
- la préparation d'un substrat laitier,
- le traitement thermique du substrat laitier (traitement thermique au moins équivalent à la pasteurisation, par exemple 95°C pendant 5 min),
- une ou plusieurs inoculations du substrat laitier,
- la conduite d'au moins une fermentation lactique du substrat inoculé dans des conditions adaptées aux souches inoculées (jusqu'à un pH de 4,8 à 4,2 généralement),
- éventuellement l'ajout d'arômes, de fruits, d'édulcorants, de colorants, de conservateurs,
- éventuellement, le lissage ou le brassage du produit fermenté,
- le conditionnement du produit fermenté, par exemple dans des récipients hermétiques,
- la conservation du produit laitier fermenté en milieu réfrigéré.

L'inoculum selon l'invention permet ainsi d'obtenir une population de ladite au moins une souche de *B. animalis lactis* (ou, s'il y en a plusieurs, desdites souches de *B. animalis lactis*), qui est d'au moins 5.10⁷ ufc par gramme de produit fermenté en fin de fermentation, de préférence d'au moins 10⁸ ufc par gramme de produit fermenté en fin de fermentation.
De manière remarquable, l'inoculum selon l'invention présente l'avantage de permettre d'obtenir une population de ladite au moins une souche de *B. animalis lactis* (ou, s'il y en a plusieurs, desdites souches de *B. animalis lactis*), qui ne descend pas au-dessous de 5.10⁷ ufc par gramme de produit fermenté, après au moins 20 jours, de préférence au moins 30 jours de conservation dudit produit fermenté à une température comprise entre 4 et 11°C, de préférence à une température comprise entre 4 et 10°C, très préférentiellement à une température comprise entre 4 et 9°C.
De manière particulièrement remarquable, l'inoculum selon l'invention présente l'avantage de permettre d'obtenir une population de ladite au moins une souche de *B. animalis lactis* (ou, s'il y en a plusieurs, desdites souches de *B. animalis lactis*), qui ne descend pas au-dessous de 10⁸ ufc par gramme de produit fermenté, après au moins 20 jours, de préférence au moins 30 jours de conservation dudit produit fermenté à une température comprise entre 4 et 11 °C, de préférence à une température comprise entre 4 et 10°C, très préférentiellement à une température comprise entre 4 et 9°C : *cf*. Figures 8 et 9, illustrant le maintien jusqu'à au moins 30 jours de conservation à 10°C de la population de *B. animalis lactis* dans des laits fermentés produits à l'aide d'un inoculum conforme à l'invention (*S. thermophilus-L. bulgaricus* + *B. animalis lactis*), par comparaison aux laits fermentés témoins, dont la population de *B*. *animalis lactis* chute rapidement à compter du 21^{ème} jour.

Dans la présente demande, les masses de produit laitier fermenté s'entendent comme étant la masse de la partie lactée du produit laitier fermenté.

La présente demande est également relative au produit laitier fermenté en tant que tel.
Un tel produit présente une population de *B. animalis lactis* qui se maintient au-dessus de celles observées dans les produits de l'art antérieur, même après au moins 20 jours, de préférence au moins 30 jours de conservation dudit produit fermenté à une température comprise entre 4 et 11°C, de préférence à une température comprise entre 4 et 10°C, très préférentiellement à une température comprise entre 4 et 9°C.
Sa composition diffère donc nécessairement des produits de l'art antérieur.
La présente demande est donc relative à un produit laitier fermenté, qui est susceptible d'être obtenu par fermentation lactique d'un substrat laitier par au moins un inoculum selon l'invention jusqu'à un pH généralement compris entre 4,8 et 4,2. De préférence, cet inoculum est sous la forme de granules congelés intégrés et/ou d'un lyophilisat intégré selon l'invention (inoculum dans lequel la L-cystéine particulière est intégrée au ferment *B. animalis lactis*). Avantageusement, cet inoculum peut en outre comprendre au moins une souche de *S. thermophilus* et/ou au moins une souche de *L. bulgaricus.*

Dans la présente demande, l'acronyme CNCM désigne la Collection Nationale de Cultures de Microorganismes (CNCM; Institut Pasteur ; 25, rue du Docteur Roux ; F-75724 PARIS CEDEX 15). Les souches déposées auprès de la CNCM porte un numéro commençant par « I », tel que « I-2494 » (souche de *B. animalis lactis*), « 1-1630 » (souche de *S. thermophilus*), « I-1632 » ou « I-1519 » (souches de *L. bulgaricus*).

Le terme "comprenant", avec lequel "incluant" ou "contenant" est synonyme, est un terme ouvert, et n'exclut pas la présence d'un ou plusieurs élément(s), ingrédient(s) ou étape(s) de méthode additionnel(s) qui ne serait(seraient) pas explicitement indiqué(s), tandis que le terme "consistant" ou "constitué" est un terme fermé, qui exclut la présence de tout autre élément additionnel, étape, ou ingrédient qui ne serait pas explicitement exposé. Le terme "consistant essentiellement" ou " essentiellement constitué" est un terme partiellement ouvert, qui n'exclut pas la présence d'un ou plusieurs élément(s), ingrédient(s) ou étape(s) additionnel(s), dans la mesure où ce(s) élément(s), ingrédient(s) ou étape(s) additionnel(s) n'affecte(nt) pas matériellement les propriétés de base de l'invention.

Par conséquent, le terme "comprenant" (ou "comprend(comprennent)") inclut les termes "consistant", "constitué", aussi bien que les termes "consistant essentiellement" et " essentiellement constitué".

Les exemples qui suivant sont données à titre purement illustratif, et ne limitent l'invention en aucune façon.

### EXEMPLES

### Exemple 1 : L'utilisation de cystéine-HCl n'est pas adaptée à la fabrication de granules dits « intégrés » qui comprendraient à la fois cystéine et B. animalis lactis

### Matériel et méthode :

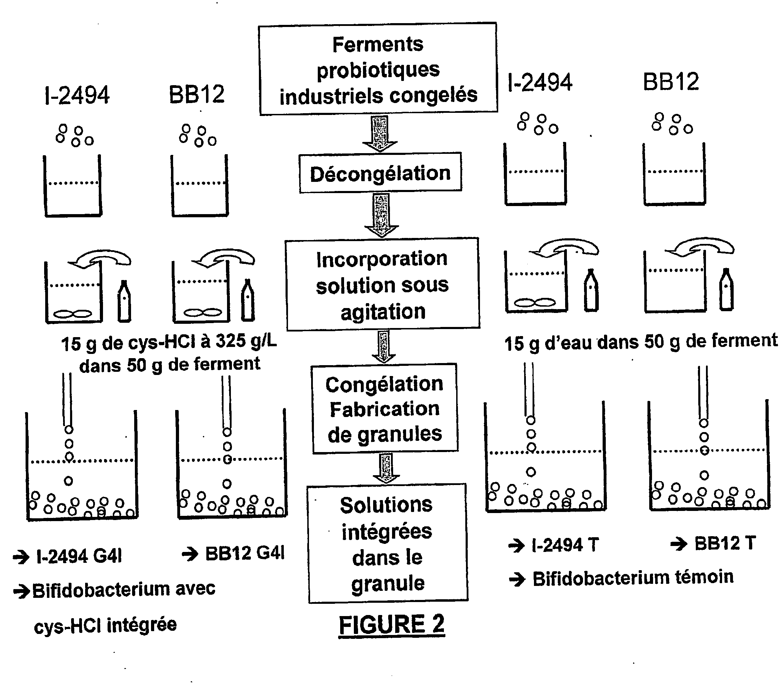

Dans cet exemple, on suit le principe de fabrication de granules présenté en Figure 2.

Les souches probiotiques utilisées dans cet exemple sont les suivantes :
- *Bifidobacterium animalis lactis* souche BB12® commercialisée par Chr. Hansen A/S, Hoersholm, Danemark
- *Bifidobacterium animalis lactis* souche. I-2494 disponible auprès de la CNCM (date de dépôt auprès de la CNCM = 20 juin 2000) ; *cf*. demande internationale WO 02/02800 déposée le 4 juillet 2001 au nom de Compagnie Gervais Danone, ainsi que les contreparties nationales et régionales de cette demande internationale, plus particulièrement, pour ce qui concerne les contreparties US de cette demande internationale, voir notamment le brevet US 7,008,785 B2.
Le cas échéant, les souches sont décongelées avant utilisation.

La cystéine utilisée est la cystéine-HCl, qui est habituellement utilisée à titre d'apport en cystéine, du fait de sa très bonne solubilité (environ 110g pour 100g d'H₂O à 20°C).
La cystéine-HCl est de l'hydrochlorate monohydraté de L-cystéine (ou, monochlorohydrate monohydraté d'acide (R)-2-amino-3-mercaptopropionique). Elle a pour formule C₃H₇NO₂S•HCl•H₂O (ou, L-cystéine•HCl•H₂O). Son numéro CAS est 7048-04-6 ; elle a une masse molaire de 175,63.
La cystéine-HCl est disponible dans le commerce, par exemple auprès de Ajinomoto Aminoscience LLC, Raleigh NC 27610, USA.

Procédé de production de granules (*cf*. Figure 2) :
50 grammes de chaque souche de *B. animalis lactis* sont mélangés à :
- 15 grammes de cystéine-HCl à 325 g/L (granules intégrés G4I Cys-HCl), ou à
- 15 grammes d'eau (granules témoins I-2494 T et BB12 T).
Le mélange se fait sous agitation de sorte à bien incorporer la solution de cystéine-HCl (ou l'eau dans le cas des témoins).

La formation de granules congelés se fait par gouttage du mélange dans de l'azote liquide. Un dispositif comprenant plusieurs aiguilles de seringue, raccordées via un tuyau à une pompe péristaltique, est alimenté en mélange et laisse tomber les gouttes formées à la sortie des aiguilles dans un bac isotherme rempli d'azote liquide.
On obtient ainsi des granules congelés de ferment probiotique G41 Cys-HCl (granules de *B. animalis lactis* 1-2494 ou BB12®, contenant de la cystéine-HCL), et des granules témoins contenant de l'eau en lieu et place de la cystéine-HCl.

### Préparation des mix laitiers (= substrats laitiers) :

Le mix laitier est composé des ingrédients suivants : du lait écrémé à 0% de matières grasses, de la crème à 40% de matières grasses et de la poudre de lait écrémé (PLE) à 33% de protéines.
Dans un premier temps, tous les ingrédients sont associés ensemble afin de standardiser le lait à un taux de protéique (TP) de 4,4%, un taux de matières grasses (MG) de 3,5% et taux de matières sèches de 15,8% avec agitation du milieu pendant 60 minutes à environ 750 tours/min avec un agitateur HEIDOLPH® afin que les protéines se réhydratent.
Le contrôle de la standardisation est effectué au détecteur infrarouge MILKOSCAN FT 120® de la société FOSS®. Ci-dessous, un exemple des quantités nécessaires de chaque ingrédient pour obtenir les cibles caractérisant le lait.

**Tableau 1 :**

| Ingrédients | En % |
|---|---|
| Lait écrémé 0% MG | 87,5 |
| Crème à 40% MG | 8,7 |
| Protéines de lait écrémé 33% TP | 3,8 |
| TOTAL | 100 |

Le lait est alors chauffé à une température de 50°C à 60°C afin de bien fondre les globules de gras. Une fois la température atteinte, les 10 litres sont homogénéisés au MICROFLUIDIIZIER®. Ceci permet de casser les globules gras en passant le lait en capillaires à travers une grille et sous une pression de 350 Bars.
Un bain-marie de la société MEMMERT® est préparé et réglé à 103°C. Le lait est transféré dans 8 bouteilles de 1 litre, avec une pesée précise de cette quantité pour chaque bouteille.
Les bouteilles sont immergées jusqu'au bas du col dans le bain-marie à 103°C pendant 35 minutes, puis 10 minutes à 95°C dans le même bain-marie.
Les bouteilles sont refroidies dans un bain d'eau froide en flux continu, puis stockées à 4°C au réfrigérateur de 12 à 24 heures jusqu'à utilisation.

### Inoculation des mix laitiers :

Les bouteilles de lait sont sorties du réfrigérateur 45 minutes avant l'inoculation des ferments et placées en bain-marie à la température de fermentation (37°C).
Quatre inoculations distinctes de mix laitier sont réalisées :
- granules I-2494 G4I Cys-HCl,
- granules témoins I-2494 T,
- granules BB12 G4I Cys-HCl,
- granules témoins BB12 T.
Chaque inoculation est réalisée à hauteur de 0,2 gramme de granules par litre de mix laitier.
Les bouteilles sont replongées dans le bain-marie (37°C), et l'évolution du pH est suivie au cours du temps (appareil CINAC® de la société YSEBAERT®).

### Résultats :

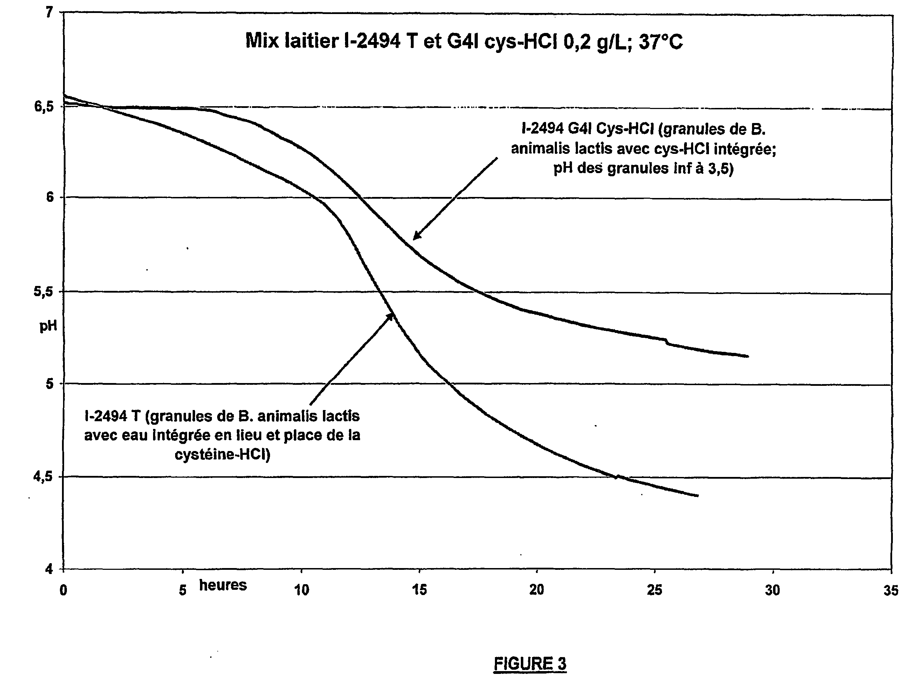

Pour *B. animalis lactis* 1-2494, tout comme pour *B. animalis lactis* BB12®, on observe une dégradation de l'état physiologique du probiotique du fait de la présence de cystéine-HCl dans les granules (temps physiologique = temps nécessaire aux bactéries pour abaisser le pH de 0,08 unité pH ; ce qui donne une mesure de la reprise de l'activité métabolique de ces bactéries).
Ces résultats sont illustrés par la Figure 3 (I-2494 G4I, comparé à I-2494 T).
L'activité du probiotique *B. animalis lactis* est très affectée par l'ajout de cystéine-HCl dans les granules de probiotique (augmentation du Ta).
La cystéine-HCl n'est pas pas une source de cystéine satisfaisante pour la fabrication de granules intégrés, qui comprennent *B. animalis lactis* et cystéine dans les mêmes granules, et qui sont destinés à la fabrication de produits laitiers fermentés à haute valeur probiotique.
La solution intégrée (granules *B. animalis lactis* + cystéine) ne peut être mise en oeuvre avec de la cystéine-HCl, car elle rend le ferment probiotique impropre à une activité métabolique correcte.

Au vu de ces résultats, il peut être observé que le pH d'une solution de cystéine-HCl est inférieur à 3,5 ; plus particulièrement, le pH d'une solution de cystéine-HCl à 1g dans 100 mL d'H₂O est de 1,5 à 2,0, et que le probiotique *B. animalis lactis* est particulièrement sensible aux pH bas, même lorsque les temps de contact sont réduits.
Il convient donc d'identifier une source de cystéine assimilable par *B. animalis lactis,* adaptée à la consommation humaine, et qui présente en solution un pH non stressant pour *B. animalis lactis.*

**Exemple 2 :** La sélection d'une L-cystéine base permet de parvenir à produire des granules « intégrés » très efficaces, malgré les problèmes liés à la faible solubilité de cette forme de cystéine

On procède de manière comparable à ce qui a été décrit en exemple 1 ci-dessus, mais en sélectionnant de la L-cystéine base (L-cystéine ; C₃H₇NO₂S; numéro CAS : 52-90-4 ; masse molaire : 121,16), en lieu et place de la cystéine-HCl.

De la L-cystéine base est notamment disponible auprès de Ajinomoto Aminoscience LLC, Raleigh NC 27610, USA.
La solubilité de cette cystéine base est de 16 g pour 100g d'H₂O à 20°C.
Le pH d'une solution contenant 1,15 g de cystéine base pour 50mL d'H₂O est de 4,5 à 5,5.

On prépare une solution mère de cystéine base à 160 g/L, et l'on mélange 3 grammes de cette solution mère, à 10 grammes de ferment *B. animalis lactis* (*B. animalis lactis* souche I-2494 ou souche BB12®), que l'on formule sous forme de granules congelés (I-2494 G4I Cys-base ; et BB12 G4I Cys-base), comme décrit dans l'exemple 1 ci-dessus.
Des granules témoins I-2494 T et BB12 T sont préparés en utilisant 3 grammes d'eau, en lieu et place de la cystéine base.
Le schéma de fabrication de ces granules est présenté en figure 4.

Quatre inoculations distinctes de mix laitier sont réalisées à hauteur de 0,2 g/L, comme décrit en exemple 1 ci-dessus.

La quantité de cystéine base contenue dans les granules G41 est donc ici de :
(160x3)/(3+10) = 36,92 milligrammes de cystéine base par gramme de granules congelés G4I.
Dans cet essai, la teneur en *B. animalis lactis* est d'environ 2.10¹⁰ ufc par gramme de granules congelés G4I ou G4 (I-2494 ou BB12).
Il y a donc ici apport de 1,85 mg de cystéine C₃H₇NO₂S par milliard d'ufc de ferment *B. animalis lactis.*

La quantité de cystéine base apportée dans le mix laitier par les granules G4I inoculé à 0,2 g/L est de 0,2 x 36,92 = 7,384 mg de cystéine par litre de mix laitier.

Les résultats des incubations des mix à 37°C montrent que la sélection de cystéine base permet d'éviter que l'état physiologique du ferment probiotique ne se dégrade dans une trop grande mesure.
Ces résultats sont illustrés par la Figure 5 (souche I-2494).

La méthode « granules à cystéine intégrée » (granules *B. animalis lactis* + cystéine) peut être mise en oeuvre avec de la L-cystéine base, car *B. animalis lactis* conserve alors une activité métabolique correcte.

**Exemple 3:** Performance du système intégré G41 Cys-base, d'une part par rapport au système combiné G4 (granules de cystéine distincts des granules de ferment probiotique), et d'autre part par rapport au système témoin (granules T, sans cystéine).

Dans cet exemple, on utilise des granules de ferment *B. animalis lactis* produits comme décrits en exemple 2, à savoir :
- des granules BB12 T (granules témoins, contenant *B. animalis lactis* BB12® + eau),
- des granules BB12 G4I (granules intégrés, contenant *B. animalis lactis* BB12® + L-cystéine base, à raison d'environ 1,85 mg de L-cystéine C₃H₇NO₂S par milliard d'ufc de ferment probiotique),
- des granules I-2494 T (granules témoins, contenant *B. animalis lactis* I-2494 + eau), et
- des granules I-2494 G41 (granules intégrés, contenant *B. animalis lactis* I-2494 + L-cystéine base, à raison d'environ 1,85 mg de cystéine C₃H₇NO₂S par milliard d'ufc de ferment probiotique).

Dans cet exemple, on utilise également des ferments dits techniques, qui sont des ferments de *S. thermophilus* et de *Lactobacillus delbrueckii* ssp. *bulgaricus.*

Les ferments techniques ici utilisés correspondent à un mélange de trois souches techniques, à savoir la souche I-1630 de *S. thermophilus* et aux souches 1-1632 et I-1519 de *L. bulgaricus* (souches disponibles auprès de la CNCM).
Les ferments techniques sont apportés sous forme de granules congelés.
Les ferments techniques sont inoculés dans le mix laitier à hauteur d'environ 1.10⁶ ufc de *S. thermophilus* 1-1630, et d'environ 2,7.10⁵ ufc de *L. bulgaricus* (avec 5% de la souche I-1632 et 95% de la souche I-1519) par gramme de substrat laitier.

Six mix laitiers sont préparés comme décrits en exemple 1, et inoculés comme suit :
- mix BB12 T et mix I-2494 T : mix témoins, inoculés par un mélange de granules de ferments techniques et de granules BB12 T ou I-2494 T, respectivement (granules contenant le probiotique *B. animalis lactis* sans cystéine) ;
- mix BB12 G4 et mix I-2494 G4: mix de la méthode « combinée », inoculés comme les mix témoins, et dans lesquels on ajoute en outre des granules de cystéine congelés ;
- mix BB12 G4I et mix I-2494 G4I: mix de la méthode « intégrée », inoculés par un mélange de granules de ferments techniques et de granules BB12 G4I ou I-2494 G4I, respectivement (granules de *B. animalis lactis* contenant la cystéine sous forme intégrée).

Les mix sont inoculés à raison de 0,5 g/L de mélange de granules (0,3 g/L de ferments techniques, et 0,2 g/L de granules de ferment probiotique *B. animalis lactis*).

Les granules de cystéine des mix G4 sont ajoutés, de sorte à apporter 7,5 mg/L de cystéine dans le mix, c'est-à-dire une quantité de cystéine comparable à celle apportée par les granules G4I (valeur calculée de 7,384 mg/L de cystéine ; *cf*. exemple 2 ci-dessus).
Les six mix inoculés sont placés en incubation à 37°C, comme décrit en exemple 1.
La bouteille est refroidie et stockée à 20°C. Puis, le décaillage de la bouteille se fait à la main.

Le conditionnement se fait manuellement en pots de 125 ml et l'opercule est thermoscellé avec la thermoscelleuse DNV-100-25 PPV-A® de la société FESTO®. Les produits sont stockés en chambre froide de 10°C pour toute la durée de l'essai.

On mesure le pH au cours du temps de fermentation, ainsi que l'évolution de la biomasse (UFC/mL en fonction du nombre de jours) au cours de la conservation du produit laitier à 10°C.
Les résultats sont illustrés par les figures 6 à 9.

La souche BB12 de *B. animalis lactis* donne des résultats tout à fait comparables à ceux de la souche I-2494.
En figures 6 et 7 (évolution du pH en fonction du temps en heures), on observe que la présence de cystéine induit une différence de Vmax, par rapport au mix témoin. L'effet cystéine est ainsi visible sur la cinétique d'acidification de *B. animalis lactis.*
On observe également que les mix G4I (L-cystéine base intégrée dans les granules de *B. animalis lactis*) donnent une cinétique tout à fait comparable à celle des mix G4 (granules de L-cystéine base distincts des granules de *B. animalis lactis*). L'intégration de l'activateur de croissance est donc parfaitement réussie.
En tableaux 2 et 3 ci-dessus, sont présentées les valeurs de quelques paramètres des cinétiques d'acidification présentés en Figures 6 et 7.

**Tableau 2 (cinétiques d'acidification BB12 de la figure 6) :**

| Ferments techniques avec | Ta | Vmax | pHm | Tmax | pH0 | TpH5,5 | TpH5 |
|---|---|---|---|---|---|---|---|
| BB12 T | 105 | -0,0069 | 5,97 | 196 | 6,43 | 277 | 417 |
| BB12 G4 | 100 | -0,0094 | 5,88 | 216 | 6,54 | 289 | 425 |
| BB12 G41 | 102 | -0,0096 | 5,88 | 218 | 6,55 | 288 | 423 |

**Tableau 3 (cinétiques d'acidification I-2494 de la figure 7) :**

| Ferments techniques avec | Ta | Vmax | pHm | Tmax | pH0 | TpH5,5 | TpH5 |
|---|---|---|---|---|---|---|---|
| I-2494T | 97 | -0,0060 | 6,13 | 185 | 6,52 | 309 | 489 |
| I-2494 G4 | 95 | -0,0095 | 5,87 | 218 | 6,53 | 290 | 418 |
| I-2494 G41 | 98 | -0,0092 | 5,88 | 219 | 6,54 | 289 | 419 |

- Ta: temps de latence (en min)
- Vmax: vitesse maximale (en unités pH / min)
- pHm: pH à la vitesse maximale d'acidification
- Tmax: temps pour arriver à Vmax (en min)
- pHO: pH en début de fermentation
- TpH5,5: temps pour arriver à pH 5,5 (en min)
- TpH5: temps pour arriver à pH 5 (en min)

Les figures 8 et 9 présentent quant à elles l'évolution de la population cellulaire du ferment probiotique *B. animalis lactis* BB12 en Figure 8, et *B. animalis lactis* probiotique I-2494 en Figure 9, au cours de la conservation du produit laitier fermenté (symbiose *S. thermophilus-L. bulgaricus,* en sus de *B. animalis lactis*) à une température de 10°C.
Ces courbes de population cellulaire confirment les résultats observés par le biais des cinétiques d'acidification présentées en figures 6 et 7.
La présence de L-cystéine stimule très nettement la population cellulaire en probiotique, et l'intégration de L-cystéine base est parfaitement réussie pour chacune des deux souches de *B. animalis lactis* représentées.

Ainsi, par rapport au système « combiné » G4 [granules de ferment probiotique *B. animalis lactis*+ granules distincts de L-cystéine base], les granules « intégrés » G4I de L-cystéine base sont tout aussi efficaces : ils permettent de conduire une fermentation lactique symbiotique (*S. thermophilus* + *L. bulgaricus*) qui est d'au moins aussi bonne qualité, et permettent de générer une population cellulaire de ferment probiotique *B. animalis lactis* qui est de taille tout à fait comparable, et qui se maintient aussi longtemps au cours du temps lors de la conservation dulait fermenté.
La sélection de L-cystéine base a donc permis d'aboutir à une intégration réussie d'activateur de croissance spécifique de *B. animalis lactis.*

Les granules « intégrés » G4I contenant ferment probiotique *B. animalis lactis* et L-cystéine base, et les granules « combinés » G4 (granules de L-cystéine base distincts des granules de probiotique) sont bien plus efficaces que le système témoin sans cystéine (granules T) : ils permettent de conduire une fermentation lactique symbiotique (*S. thermophilus* + *L. bulgaricus*) de qualité au moins comparable, tout en générant une population cellulaire de ferment probiotique *B. animalis lactis* qui est nettement plus élevée, et qui se maintient bien plus longtemps au cours du temps lors de la conservation du lait fermenté.

## Revendications

1. Inoculum qui est spécialement adapté à l'ensemencement direct d'au moins une souche de *Bifidobacterium animalis* ssp. *lactis* dans un substrat laitier, pour la transformation de ce substrat laitier en produit laitier fermenté adapté à la consommation humaine,
**caractérisé en ce que** cet inoculum comprend, en mélange ou sous forme de collection :
- de la cystéine qui est non liée à d'autres acides aminés par liaison peptidique,
et
- au moins une souche de *B. animalis lactis*,
ladite cystéine et ladite au moins une souche de *B. animalis lactis* se trouvant chacune contenues dans, ou sous la forme de granule(s) congelé(s) et/ou de lyophilisat(s),
ladite cystéine étant en outre de la L-cystéine base, dont la formule sous forme réduite est HSCH₂CH(NH₂)CO₂H, de sorte que le pH de la solution obtenue après :
- décongélation dudit(desdits) granule(s), et/ou
- re-solubilisation dudit(desdits) lyophilisat(s) dans une proportion allant de 1 à 2 gramme(s) de lyophilisat(s) pour 8 à 10 mL d'H₂O,
est au moins égal à 4,
ladite cystéine étant présente dans ledit inoculum en une quantité allant :
- de 1 gramme pour 1.10¹⁴ ufc de ladite au moins une souche de *B. animalis lactis* (ou, s'il y en a plusieurs, desdites souches de *B. animalis lactis*),
- à 1 gramme pour 3,5.10¹⁰ ufc de ladite au moins une souche de *B. animalis lactis* (ou, s'il y en a plusieurs, desdites souches de *B. animalis lactis*).

2. Inoculum selon la revendication 1, **caractérisée en ce que** ladite cystéine est une L-cystéine qui présente un pH supérieur à 4 lorsqu'elle est en solution.

3. Inoculum selon la revendication 1 ou 2, **caractérisé en ce que** ladite cystéine n'est pas du chlorhydrate de cystéine, ou du chlorhydrate monohydraté de cystéine.

4. Inoculum selon l'une quelconque des revendications précédentes, **caractérisé en ce qu'**il ne comprend pas de chlorhydrate de cystéine.

5. Inoculum selon l'une quelconque des revendications 1 à 4, **caractérisé en ce qu'**il comprend au moins un granulé congelé et/ou un lyophilisat, qui contient à la fois :
- tout ou partie de ladite cystéine, et
- des cellules de ladite au moins une souche de *B. animalis lactis*.

6. Inoculum selon l'une quelconque des revendications 1 à 4, **caractérisé en ce qu'**il comprend :
- au moins deux granules congelés, ou
- au moins deux lyophilisats distincts, ou
- au moins un granulé congelé et au moins un lyophilisat,
et **caractérisé en ce que**, pour chacune de ces paires d'entités physiques :
- l'une des deux entités physiques contient tout ou partie de ladite cystéine, sans contenir de cellules de *B. animalis lactis*, et
- l'autre des deux entités physiques contient des cellules de *B. animalis lactis,* sans contenir de ladite cystéine.

7. Inoculum selon l'une quelconque des revendications précédentes, **caractérisé en ce que** ladite cystéine est présente dans ledit inoculum en une quantité allant :
- de 0,01 milligramme par milliard de *ufc* de ladite au moins une souche de *B. animalis lactis* (ou, s'il y en a plusieurs, desdites souches de *B. animalis lactis*),
- à 30 milligrammes par milliard de *ufc* de ladite au moins une souche de *B. animalis lactis* (ou, s'il y en a plusieurs, desdites souches de *B. animalis lactis*), préférentiellement en une quantité allant :
- de 1 gramme pour 0,2.10¹⁴ *ufc* de ladite au moins une souche de *B. animalis lactis* (ou, s'il y en a plusieurs, desdites souches de *B. animalis lactis*).
- à 1 gramme pour 10.10¹⁰ *ufc* de ladite au moins une souche de *B. animalis lactis* (ou, s'il y en a plusieurs, desdites souches de *B. animalis lactis*),
plus préférentiellement en une quantité allant :
- de 0,05 milligramme par milliard de *ufc* de ladite au moins une souche de *B. animalis lactis* (ou, s'il y en a plusieurs, desdites souches de *B. animalis lactis*),
- à 10 milligrammes par milliard de *ufc* de ladite au moins une souche de *B. animalis lactis* (ou, s'il y en a plusieurs, desdites souches de *B. animalis lactis*).

8. Inoculum selon l'une quelconque des revendications précédentes, **caractérisé en ce que** ladite cystéine est présente dans ledit inoculum en une quantité allant de 4,90 mg à 144 mg pour 5.10⁹ à 5.10¹¹ *ufc* de ladite au moins une souche de *B. animalis lactis.*

9. Inoculum selon l'une quelconque des revendications précédentes, **caractérisé en ce que** 1 gramme desdits granules à 16-17% de matière sèche comprend de 5.10⁹ à 5.10¹¹ *ufc* de ladite au moins une souche de *B. animalis lactis*.

10. Inoculum selon l'une quelconque des revendications précédentes, **caractérisé en ce que** 1 gramme desdits granules à 16-17% de matière sèche comprend de 4,90 mg à 144 mg de ladite cystéine.

11. Inoculum selon l'une quelconque des revendications précédentes, **caractérisé en ce qu'**il ne comprend pas plus de 0,5% (p/p) de levure, d'extrait de levure ou d'autolysat de levure.

12. Inoculum selon l'une quelconque des revendications précédentes, **caractérisé en ce que** ladite souche de *B. animalis lactis* est la souche I-2494.

13. Inoculum selon l'une quelconque des revendications précédentes, **caractérisé en ce qu'**il comprend en outre au moins une souche de bactérie lactique autre que *B. animalis lactis.*

14. Inoculum selon l'une quelconque des revendications précédentes, **caractérisé en ce que** ladite au moins une autre souche de bactérie lactique est présente dans une structure physique distincte de celle qui contient les cellules de *B. animalis lactis*.

15. Inoculum selon la revendication 12 ou 13, **caractérisé en ce que** ladite au moins une autre souche de bactérie lactique comprend au moins une souche de *S. thermophilus* et au moins une souche de *L. bulgaricus.*

16. Granule congelé, susceptible d'être issu d'un inoculum selon l'une quelconque des revendications 1 à 15, **caractérisé en ce qu'**il comprend au moins une souche de *B. animalis lactis* et de la L-cystéine qui est non liée à d'autres acides aminés par liaison peptidique, ladite L-cystéine étant une cystéine sous forme telle que le pH de la solution obtenue après décongélation dudit(desdits) granule(s) est au moins égal à 4.

17. Lyophilisat, susceptible d'être un inoculum selon l'une quelconque des revendications 1 à 15, ou d'être issu d'un tel inoculum, **caractérisé en ce qu'**il comprend au moins une souche de *B. animalis lactis* et de la L-cystéine qui est non liée à d'autres acides aminés par liaison peptidique, ladite L-cystéine étant sous une forme telle que le pH de la solution obtenue après re-solubilisation dudit(desdits) lyophilisat(s) dans une proportion allant de 1 à 2 gramme(s) de lyophilisat(s) pour 8 à 10 mL d'H₂O, est au moins égal à 4.

18. Procédé de stimulation de la croissance et/ou du métabolisme de *B. animalis lactis* sur substrat laitier, qui comprend :
- l'inoculation d'un substrat laitier par au moins un inoculum selon l'une quelconque des revendications 1 à 15, et/ou par au moins un granule selon la revendication 16, et/ou par au moins un lyophilisat selon la revendication 17, et
- le maintien de ce substrat inoculé dans des conditions de température et d'atmosphère favorables au métabolisme de *B. animalis lactis.*

19. Procédé de production d'un produit laitier fermenté à haute valeur probiotique, qui comprend :
- l'inoculation d'un substrat laitier par au moins un inoculum, selon l'une quelconque des revendications 1 à 15, et/ou par au moins un granule selon la revendication 16, et/ou par au moins un lyophilisat selon la revendication 17, et
- la fermentation de ce substrat par ledit au moins un inoculum.

20. Procédé selon la revendication 19, qui comprend :
- l'inoculation d'un substrat laitier par au moins un inoculum selon l'une quelconque des revendications 1 à 15, et/ou par au moins un granule selon la revendication 16, et/ou par au moins un lyophilisat selon la revendication 17, et
- l'inoculation de ce substrat laitier par au moins une souche de *S. thermophilus* et au moins une souche de *L. bulgaricus,* et
- la fermentation de ce substrat par ledit au moins un inoculum et lesdites souches de *S. thermophilus* et *L. bulgaricus.*

21. Procédé selon l'une quelconque des revendications 18 à 20, **caractérisé en ce que** ledit inoculum est ajouté dans le substrat laitier dans une quantité qui apporte L-cystéine et cellules de *B. animalis lactis* dans une quantité allant de 7 à 11 mg de L-cystéine par litre de substrat laitier, pour 10⁹ à 10¹¹ ufc de cellules de *B. animalis lactis* par litre de substrat laitier.

## Claims

1. An inoculum which is specially adapted for the direct inoculation of at least one strain of *Bifidobacterium animalis* ssp *lactis* into a dairy substrate, to transform said dairy substrate into a fermented milk product which is suitable for human consumption, **characterized in that** said inoculum comprises, as a mixture or in the form of a kit of parts:
• cysteine which is not bound to other amino acids via a peptide linkage; and
• at least one strain of *B. animalis lactis*;
said cysteine and said at least one strain of *B. animalis lactis* each being contained in or in the form of frozen granules and/or lyophilisate(s);
said cysteine also being an L-cysteine base the formula for which, in the reduced form, is HSCH₂CH(NH)₂CO₂H, such that the pH of the solution obtained after:
• defrosting said granule(s); and/or
• re-dissolving said lyophilisate(s) in a proportion of 1 to 2 grams of lyophilisate(s) per 8 to 10 mL of H₂O;
is at least 4;
said cysteine being present in said inoculum in a quantity of:
• 1 gram per 1 x 10¹⁴ cfu of said at least one strain of *B. animalis lactis* (or, if there are several, said strains of *B. animalis lactis*);
• to 1 gram per 3.5 x 10¹⁰ cfu of said at least one strain of *B. animalis lactis* (or, if there are several, said strains of *B. animalis lactis*).

2. An inoculum according to claim 1, **characterized in that** said cysteine is an L-cysteine which has a pH of more than 4 when it is in solution.

3. An inoculum according to claim 1 or claim 2, **characterized in that** said cysteine is not cysteine hydrochloride or cysteine hydrochloride monohydrate.

4. An inoculum according to any one of the preceding claims, **characterized in that** it does not comprise cysteine hydrochloride.

5. An inoculum according to any one of claims 1 to 4, **characterized in that** it comprises at least one frozen granule and/or a lyophilisate which contains both:
• all or a portion of said cysteine; and
• cells of said at least one strain of *B. animalis lactis.*

6. An inoculum according to any one of claims 1 to 4, **characterized in that** it comprises:
• at least two frozen granules; or
• at least two distinct lyophilisates; or
• at least one frozen granule and at least one lyophilisate;
**characterized in that** for each of these pairs of physical entities:
• one of the two physical entities contains all or part of said cysteine without containing cells of *B. animalis lactis*; and
• the other of the two physical entities contains cells of *B. animalis lactis* without containing said cysteine.

7. An inoculum according to any one of the preceding claims, **characterized in that** said cysteine is present in said inoculum in a quantity of:
• 0.01 milligrams per billion cfu of said at least one strain of *B. animalis lactis* (or, if there are several, said strains of *B. animalis lactis*);
• to 30 milligrams per billion cfu of said at least one strain of *B. animalis lactis* (or, if there are several, said strains of *B. animalis lactis*),
preferably in a quantity of:
• 1 gram per 0.2 x 10¹⁴ cfu of said at least one strain of *B. animalis lactis* (or, if there are several, said strains of *B. animalis lactis*);
• to 1 gram per 10 x 10¹⁰ cfu of said at least one strain of *B. animalis lactis* (or, if there are several, said strains of *B. animalis lactis*),
more preferably in a quantity of:
• 0.05 milligrams per billion cfu of said at least one strain of *B. animalis lactis* (or, if there are several, said strains of *B. animalis lactis*);
• to 10 milligrams per billion cfu of said at least one strain of *B. animalis lactis* (or, if there are several, said strains of *B. animalis lactis*).

8. An inoculum according to any one of the preceding claims, **characterized in that** said cysteine is present in said inoculum in a quantity of 4.90 mg to 144 mg per 5 x 10⁹ to 5 x 10¹¹ cfu of said at least one strain of *B. animalis lactis.*

9. An inoculum according to any one of the preceding claims, **characterized in that** 1 gram of said granules with 16-17% dry matter content comprises 5 x 10⁹ to 5 x 10¹¹ cfu of said at least one strain of *B. animalis lactis.*

10. An inoculum according to any one of the preceding claims, **characterized in that** 1 gram of said granules with 16-17% dry matter content comprises 4.90 mg to 144 mg of said cysteine.

11. An inoculum according to any one of the preceding claims, **characterized in that** it contains no more than 0.5% (w/w) of yeast, yeast extract or yeast autolysate.

12. An inoculum according to any one of the preceding claims, **characterized in that** said strain of *B. animalis lactis* is strain I-2494.

13. An inoculum according to any one of the preceding claims, **characterized in that** it further comprises at least one strain of lactic bacteria other than *B. animalis lactis.*

14. An inoculum according to any one of the preceding claims, **characterized in that** said at least one other strain of lactic bacteria is present in a physical structure which is distinct from that which contains the cells of *B. animalis lactis.*

15. An inoculum according to claim 12 or 13, **characterized in that** said at least one other strain of lactic bacteria comprises at least one strain of *S. thermophilus* and at least one strain of *L. bulgaricus.*

16. A frozen granule which is capable of being derived from an inoculum according to any one of claims 1 to 15, **characterized in that** it comprises at least one strain of *B. animalis lactis* and L-cysteine which is not bound to other amino acids by a peptide linkage, said L-cysteine being a cysteine in a form such that the pH of the solution obtained after defrosting said granule(s) is at least 4.

17. A lyophilisate which is capable of being an inoculum in accordance with any one of claims 1 to 15, or of being derived from said inoculum, **characterized in that** it comprises at least one strain of *B. animalis lactis* and an L-cysteine which is not bonded to other amino acids via a peptide linkage, said L-cysteine being in a form such that the pH of the solution obtained after re-dissolving said lyophilisate(s) in a proportion of 1 to 2 grams of lyophilisate(s) per 8 to 10 mL of H₂O is at least 4.

18. A process for stimulating the growth and/or metabolism of *B. animalis lactis* on a dairy substrate, which comprises:
• inoculating a dairy substrate with at least one inoculum in accordance with any one of claims 1 to 15, and/or with at least one granule in accordance with claim 16 and/or with at least one lyophilisate in accordance with claim 17; and
• maintaining said inoculated substrate under conditions of temperature and atmosphere which are favorable to the metabolism of *B. animalis lactis.*

19. A process for producing a fermented dairy product with a high probiotic value, comprising:
• inoculating a dairy substrate with at least one inoculum in accordance with any one of claims 1 to 15, and/or with at least one granule in accordance with claim 16 and/or with at least one lyophilisate in accordance with claim 17; and
• fermenting said substrate with said at least one inoculum.

20. A process according to claim 19, which comprises:
• inoculating a dairy substrate with at least one inoculum in accordance with any one of claims 1 to 15, and/or with at least one granule in accordance with claim 16 and/or with at least one lyophilisate in accordance with claim 17;
• inoculating said dairy substrate with at least one strain of *S. thermophilus* and at least one strain of *L. bulgaricus*; and
• fermenting said substrate with said at least one inoculum and said strains of *S. thermophilus* and *L. bulgaricus.*

21. A process according to any one of claims 18 to 20, **characterized in that** said inoculum is added to the dairy substrate in a quantity which adds L-cysteine and cells of *B. animalis lactis* in a quantity of 7 to 11 mg of L-cysteine per liter of dairy substrate, for 10⁹ to 10¹¹ cfu of cells of *B. animalis lactis* per liter of dairy substrate.

## Patentansprüche

1. Inokulum, das besonders geeignet ist zum direkten Animpfen mindestens eines Stamms von *Bifidobacterium animalis* ssp. *lactis* in einem Milchsubstrat zur Transformation dieses Milchsubstrats in ein fermentiertes Milchprodukt, das zum menschlichen Verzehr geeignet ist,
**dadurch gekennzeichnet, dass** dieses Inokulum im Gemisch oder in Form einer Kombination enthält:
- Cystein, das nicht mit anderen Aminosäuren durch Peptidbindung verknüpft ist, und
- mindestens einen Stamm von *B. animalis lactis,*
wobei das Cystein und der mindestens eine Stamm von *B. animalis lactis* jeweils in Form von gefrorenen Granulatkörnchen und/oder Lyophilisat(en) oder darin enthalten vorliegen,
wobei das Cystein außerdem basisches L-Cystein ist, dessen Formel in reduzierter Form HSCH₂CH(NH₂)CO₂H lautet, so dass der pH der nach:
- Auftauen der Granulatkörnchen und/oder
- erneutem Auflösen des Lyophilisats (der Lyophilisate) in einem Verhältnis von 1 bis 2 Gramm Lyophilisat auf 8 bis 10 ml H₂O erhaltenen Lösung mindestens gleich 4 beträgt,
wobei das Cystein in dem Inokulum in einer Menge von:
- 1 Gramm auf 1.10¹⁴ UFC des mindestens einen Stamms von *B. animalis lactis* (oder falls mehrere vorhanden sind, der Stämme von *B. animalis lactis*)
- bis 1 Gramm auf 3,5.10¹⁰ UFC des mindestens einen Stamms von *B. animalis lactis* (oder falls mehrere vorhanden sind, der Stämme von *B. animalis lactis*) vorhanden ist.

2. Inokulum nach Anspruch 1, **dadurch gekennzeichnet, dass** das Cystein ein L-Cystein ist, das einen pH über 4 aufweist, wenn es in Lösung vorliegt.

3. Inokulum nach Anspruch 1 oder 2, **dadurch gekennzeichnet, dass** das Cystein kein Chlorhydrat von Cystein oder Chlorhydrat-Monohydrat von Cystein ist.

4. Inokulum nach einem der vorhergehenden Ansprüche, **dadurch gekennzeichnet, dass** es kein Chlorhydrat von Cystein umfasst.

5. Inokulum nach einem der Ansprüche 1 bis 4, **dadurch gekennzeichnet, dass** es mindestens ein gefrorenes Granulat und/oder ein Lyophilisat umfasst, das gleichzeitig:
- das Ganze oder einen Teil des Cysteins und
- Zellen des mindestens einen Stamms von *B. animalis lactis* enthält.

6. Inokulum nach einem der Ansprüche 1 bis 4, **dadurch gekennzeichnet, dass** es umfasst:
- mindestens zwei gefrorene Granulatkörnchen oder
- mindestens zwei bestimmte Lyophilisate oder
- mindestens ein gefrorenes Granulat und mindestens ein Lyophilisat und **dadurch gekennzeichnet, dass** bei jedem dieser Paare von physikalischen Einheiten:
- die eine der beiden physikalischen Einheiten das Ganze oder einen Teil des genannten Cysteins enthält, ohne dass Zellen von *B. animalis lactis* enthalten sind, und
- die andere der beiden physikalischen Einheiten Zellen von *B. animalis lactis* enthält, ohne dass das genannte Cystein enthalten ist.

7. Inokulum nach einem der vorhergehenden Ansprüche, **dadurch gekennzeichnet, dass** das Cystein in dem Inokulum in einer Menge:
- von 0,01 Milligramm pro Milliarde UFC des mindestens einen Stamms von *B. animalis lactis* (oder falls mehrere vorhanden sind, der Stämme von *B. animalis lactis*)
- bis 30 Milligramm pro Milliarde UFC des mindestens einen Stamms von *B. animalis lactis* (oder falls mehrere vorhanden sind, der Stämme von *B. animalis lactis*)*,*
bevorzugt in einer Menge:
- von 1 Gramm auf 0,2·10¹⁴ UFC des mindestens einen Stamms von *B. animalis lactis* (oder falls mehrere vorhanden sind, der Stämme von *B. animalis lactis*)
- bis 1 Gramm auf 10·10¹⁰ UFC des mindestens einen Stamms von *B. animalis lactis* (oder falls mehrere vorhanden sind, der Stämme von *B. animalis lactis*)*,*
besonders bevorzugt in einer Menge:
- von 0,05 Milligramm pro Milliarde UFC des mindestens einen Stamms von *B. animalis lactis* (oder falls mehrere vorhanden sind, der Stämme von *B. animalis lactis*)
- bis 10 Milligramm pro Milliarde UFC des mindestens einen Stamms von *B. animalis lactis* (oder falls mehrere vorhanden sind, der Stämme von *B. animalis lactis*) vorhanden ist.

8. Inokulum nach einem der vorhergehenden Ansprüche, **dadurch gekennzeichnet, dass** das Cystein in dem Inokulum in einer Menge von 4,90 mg bis 144 mg auf 5·10⁹ bis 5·10¹¹ UFC des mindestens einen Stamms von *B. animalis lactis* vorhanden ist.

9. Inokulum nach einem der vorhergehenden Ansprüche, **dadurch gekennzeichnet, dass** 1 Gramm des Granulats mit 16 bis 17 % Trockenmasse von 5·10⁹ bis 5·10¹¹ UFC des mindestens einen Stamms von *B. animalis lactis* umfasst.

10. Inokulum nach einem der vorhergehenden Ansprüche, **dadurch gekennzeichnet, dass** 1 Gramm des Granulats mit 16 bis 17 % Trockenmasse von 4,90 mg bis 144 mg des Cysteins umfasst.

11. Inokulum nach einem der vorhergehenden Ansprüche, **dadurch gekennzeichnet, dass** es nicht mehr als 0,5 Gew.-% Hefe, Hefeextrakt oder Hefeautolysat umfasst.

12. Inokulum nach einem der vorhergehenden Ansprüche, **dadurch gekennzeichnet, dass** der Stamm von *B. animalis lactis* der Stamm I-2494 ist.

13. Inokulum nach einem der vorhergehenden Ansprüche, **dadurch gekennzeichnet, dass** es außerdem mindestens einen Stamm von Milchbakterien umfasst, der nicht *B. animalis lactis* ist.

14. Inokulum nach einem der vorhergehenden Ansprüche, **dadurch gekennzeichnet, dass** der mindestens eine weitere Stamm von Milchbakterien in einer physikalischen Struktur vorliegt, die sich von der unterscheidet, die die Zellen von *B. animalis lactis* enthält.

15. Inokulum nach Anspruch 12 oder 13, **dadurch gekennzeichnet, dass** der mindestens eine weitere Stamm von Milchbakterien mindestens einen Stamm von *S. thermophilus* und mindestens einen Stamm von *L. bulgaricus* umfasst.

16. Gefrorenes Granulat, das aus einem Inokulum nach einem der Ansprüche 1 bis 15 gewonnen werden kann, **dadurch gekennzeichnet, dass** es mindestens einen Stamm von *B. animalis lactis* und L-Cystein umfasst, das nicht mit anderen Aminosäuren durch Peptidbindung verknüpft ist, wobei das L-Cystein ein Cystein ist, das in einer solchen Form vorliegt, dass der pH der nach Auftauen des (der) Granulatkörnchen erhaltenen Lösung mindestens gleich 4 ist.

17. Lyophilisat, das ein Inokulum nach einem der Ansprüche 1 bis 15 sein kann oder aus einem solchen Inokulat gewonnen werden kann, **dadurch gekennzeichnet, dass** es mindestens einen Stamm von *B. animalis lactis* und L-Cystein umfasst, das nicht mit anderen Aminosäuren durch Peptidbindung verknüpft ist, wobei das L-Cystein in einer solchen Form vorliegt, dass der pH der nach erneutem Auflösen des Lyophilisats (der Lyophilisate) in einem Anteil von 1 bis 2 Gramm Lyophilisat auf 8 bis 10 ml H₂O erhaltenen Lösung mindestens gleich 4 beträgt.

18. Verfahren zur Stimulation des Wachstums und/oder des Metabolismus von *B. animalis lactis* auf einem Milchsubstrat, das umfasst:
- Inokulation eines Milchsubstrats mit mindestens einem Inokulum nach einem der Ansprüche 1 bis 15 und/oder mit mindestens einem Granulat nach Anspruch 16 und/oder mit mindestens einem Lyophilisat nach Anspruch 17 und
- Halten des inokulierten Substrats unter für den Metabolismus von *B. animalis lactis* günstigen Temperatur- und Atmosphärenbedingungen.

19. Verfahren zur Herstellung eines fermentierten Milchprodukts mit hohem probiotischem Wert, das umfasst:
- Inokulation eines Milchsubstrats mit mindestens einem Inokulum nach einem der Ansprüche 1 bis 15 und/oder mit mindestens einem Granulat nach Anspruch 16 und/oder mit mindestens einem Lyophilisat nach Anspruch 17 und
- Fermentation des Substrats mit dem mindestens einen Inokulum.

20. Verfahren nach Anspruch 19, das umfasst:
- Inokulation eines Milchsubstrats mit mindestens einem Inokulum nach einem der Ansprüche 1 bis 15 und/oder mit mindestens einem Granulat nach Anspruch 16 und/oder mit mindestens einem Lyophilisat nach Anspruch 17 und
- Inokulation des Milchsubstrats mit mindestens einem Stamm von *S. thermophilus* und mindestens einem Stamm von *L. bulgaricus* und
- Fermentation des Substrats mit dem mindestens einen Inokulum und den Stämmen von *S. thermophilus* und *L. bulgaricus.*

21. Verfahren nach einem der Ansprüche 18 bis 20, **dadurch gekennzeichnet, dass** das Inokulum in das Milchsubstrat in einer Menge zugegeben wird, die L-Cystein und Zellen von *B. animalis lactis* in einer Menge von 7 bis 11 mg L-Cystein pro Liter Milchsubstrat, auf 10⁹ bis 10¹¹ UFC der Zellen von *B. animalis lactis* pro Liter Milchsubstrat einbringt.
